(19) Europäisches Patentamt
European Patent Office
Office européen des brevets

(11) **EP 0 741 901 B1**

(12) **EUROPEAN PATENT SPECIFICATION**

(45) Date of publication and mention
of the grant of the patent:
**19.02.2003 Bulletin 2003/08**

(51) Int Cl.$^7$: **G11B 27/13**, G11B 27/17

(21) Application number: **95905360.4**

(86) International application number:
**PCT/US94/14301**

(22) Date of filing: **14.12.1994**

(87) International publication number:
**WO 95/016991 (22.06.1995 Gazette 1995/26)**

(54) **METHOD AND APPARATUS FOR DETERMINING ADDRESSES IN TIME ALONG A RECORDING TAPE**

VERFAHREN UND GERÄT ZUR BESTIMMUNG VON ADRESSEN IM LAUFE DER ZEIT ENTLANG EINEM AUFZEICHNUNGSBAND

PROCEDE ET APPAREIL PERMETTANT DE DETERMINER DES ADRESSES DANS LE TEMPS SUR UNE BANDE D'ENREGISTREMENT

(84) Designated Contracting States:
**BE DE ES FR GB IT**

(30) Priority: **15.12.1993 US 167285**

(43) Date of publication of application:
**13.11.1996 Bulletin 1996/46**

(73) Proprietor: **Index Systems, Inc.
Tortola, British Virgin Islands (VG)**

(72) Inventors:
• **Kwoh, Daniel S.
La Canada/Flintridge, CA.91011 (US)**
• **Ng, Yee Kong
New Territories, Hong Kong (HK)**

(74) Representative:
**Müller, Wolfram Hubertus, Dipl.-Phys. et al
Patentanwälte
Maikowski & Ninnemann,
Postfach 15 09 20
10671 Berlin (DE)**

(56) References cited:
**US-A- 4 030 338**     **US-A- 4 172 231**
**US-A- 4 638 394**     **US-A- 4 644 436**
**US-A- 4 996 611**     **US-A- 5 179 479**
**US-A- 5 195 000**

• **PATENT ABSTRACTS OF JAPAN vol. 009, no. 257 (P-396), 15 October 1985 & JP 60 106094 A (MATSUSHITA DENKI SANGYO KK), 11 June 1985**
• **PATENT ABSTRACTS OF JAPAN vol. 006, no. 241 (P-158), 30 November 1982 & JP 57 138074 A (SHARP KK), 26 August 1982**

**Description**

**Background of the Invention**

This invention relates to apparatus for addressing information stored on a serial media, such as a magnetic tape. More particularly, the invention relates to an apparatus for addressing the location of a program, such as a television program, stored on a magnetic tape.

Two general methods for addressing data are used in the conventional art: random addressing and sequential addressing. The random addressing method is used for various mass storage media, including long playing (LP) record players, compact disc (CD) drives and video disc drives for consumer use and hard disc drives, floppy disc drives and optical disc drives for use with computers. Information is randomly addressed in these mass storage devices by moving a movable head directly over the area of the mass storage media that contains the desired information. The random addressing method is also used for addressing semiconductor memory, such as Dynamic Random Access Memory (DRAM) and Static Random Access Memory (SRAM).

The sequential addressing method is used for addressing mass storage devices that can only be accessed sequentially, including: analog audio tapes used for audio cassette drives; video tapes used with video cassette recorders (VCRs); digital audio tapes; digital tape drives and tape backup cassette drives for use with computers; and analog tape drives for instrumentation purposes. All of these devices use magnetic tape as the storage media. The advantage of magnetic tape is that it has very low storage cost compared with the storage cost of random access devices with movable heads and especially low cost compared to semiconductor memory. The disadvantages and problems of using magnetic tape are three-fold.

First, to go to a particular location on a tape, the tape must be either advanced or rewound in a serial or sequential manner. Unless forward or reverse operations can be performed at very high speed, this can be a time consuming process.

Second, the exact contents and location of records on the tape are not known. Random access devices, such as a disc drive, can record an index of the device contents at the beginning of the disc and anytime the index information needs to be accessed, the read or write head simply skips over to read the index. For magnetic tape, even if the index is recorded in a reserved area at the beginning of the tape, as is presently done in some video tape or computer tape backup systems, its usefulness is limited, due to the time required to rewind the tape all the way to the beginning, assuming the tape is not at the beginning when the need arises to search for the index.

Third, the absolute current location of the tape is not known. Most tape drives have tape counters which only indicate relative location. For example, if a tape cassette is played and then removed from a tape drive without rewinding, the next time the cassette is inserted and played by a tape drive, the absolute location of the tape in the cassette will no longer be known. Attempts have been made to overcome this problem by writing absolute address marks onto the tape. For example, some recent video tapes use the VHS Address Search System (VASS) whereby absolute address marks are written at 1 minute intervals onto the control track of a VHS tape. Another technique in the conventional art is to use a Video Index Search System (VISS), which can be used to place a mark on the control track of the tape. For example, a VISS mark can be placed at the beginning of each program; however, this technique alone does not provide a user information on how to access a program from a number of programs on a tape.

Another addressing application is for tapes used to back up computer hard discs. A streaming mode is usually used and a constant stream of data blocks (usually 512 bytes) are written onto the tape, each block being usually preceded by one or two address bytes. This provides some addressing, but the addressing resolution decreases as the block size increases.

Knowing the absolute address on a tape is important. For example, assume that there are 5 programs or records on a tape and each of their starting addresses is known and a user desires to go to the starting location of program 4. Without knowing the absolute address of where the tape is currently positioned, the user or the drive has no way of knowing whether to rewind or fast forward the tape to reach the desired record.

In order for tape drives to compete against random access devices it is important that these problems be either overcome or ameliorated. There are a large number of users of video cassette recorders with video cassette tapes, which are not likely to be replaced by a random access media in the near future. So, providing a method of finding the absolute address on a video cassette tape would solve a long standing problem in the art.

In the conventional art, there are methods for determining the location on a magnetic tape. U.S. Patent No. 3,921,220 issued Nov. 8, 1975 to Primosch is for a reel to reel magnetic tape transport and senses the actual magnetic tape position by either counting rotations of one tape reel or by comparing the number of rotations of one tape reel with the number of rotations of a tape drive capstan mechanism. This method has limited accuracy.

A U.S. Patent to d'Alayer de Costemore d'Arc et al., Re. No. 30,939 reissued May 18, 1982, which is a reissue of Patent No. 4,172,231 issued Oct. 23, 1979, determines the magnetic tape position by using the ratio of the rotational speeds of the two reels of a reel to reel tape transport. The ratio of the speeds continuously changes as the tape is transferred from one reel to the other reel. This method is also not as accurate as desired.

JP-A-57138 074 which is considered to represent the closest prior art further discloses to determine the address based on two rotation periods of one of the reels.

Accordingly, there is a need in the art for an addressing system that provides a fast and accurate way of searching for the starting points of programs stored on a magnetic tape and providing random access for a serial media at a much lower cost than random access media using movable heads or semiconductor memory. There is also a need in the art for an addressing system that determines the current position on a magnetic tape and provides a means of homing into the destination address, during a search. The art also needs a system for determining the end address and lengths of programs as they are recorded.

## Summary of the Invention

According to the present invention, methods and apparatus are provided as defined in the appended claim.

In an embodiment of the present invention, an apparatus for determining an address in time between a beginning of a tape on a reel and a current location along a recording tape wound around a hub of a reel includes a means for determining a single rotational period of the reel near a first location along the recording tape being represented as Tp. A single rotational period of the reel is determined when the radius of the tape on the reel is approximately the same as the radius of the reel hub being represented as To and stored. Also, a differential period between one rotational period of the reel and the next rotational period of the reel as the recording tape is wound around or unwound from the reel being represented as dT is determined and stored. A means is included for deriving from Tp, To and dT, an address in time from the beginning of the tape to the first location on the tape.

## Brief Description of the Drawings

The features of specific embodiments of the best mode contemplated of carrying out the invention are illustrated in the drawings, in which:

FIG. 1a is a block diagram illustrating a video cassette recorder including apparatus for determining an address in time between the beginning of the tape on the reel and the current location and/or the start of a program recorded along a recording tape wound around a hub of a reel in accordance with principles of the invention.

FIG. 1b is a block diagram of a rotation period counter and revolution counter in accordance with principles of the invention.

FIG. 1c is an illustration of a display of a directory in accordance with principles of the invention.

FIG. 2a is an illustrative diagram showing the amount of tape on each reel of a video cassette tape at the start of a recording session in accordance with principles of the invention.

FIG. 2b is an illustrative diagram showing the amount of tape on each reel of a video cassette tape at the end of a recording session in accordance with principles of the invention.

FIG. 2c is an illustrative diagram showing the amount of tape on each reel of a video cassette tape when the tape is wound on the supply reel in accordance with principles of the invention.

FIG. 2d is an illustrative diagram showing the amount of tape on each reel of a video cassette tape when the tape is wound on the take-up reel in accordance with principles of the invention.

FIG. 3 is a flowchart showing the steps employed in determining the start and end address of a program recorded on a tape in time from the beginning of a tape by measuring the rotational period of the take-up reel in accordance with principles of the invention.

FIG. 4 is a flowchart showing the steps employed in determining the start and end address of a program recorded on a tape in time from the beginning of a tape by measuring the rotational period of the supply reel in accordance with principles of the invention.

FIG. 5a is a flowchart showing the steps employed in determining the current address in time from the beginning of a tape on a reel in accordance with principles of the invention.

FIG. 5b is a flowchart showing the steps employed in determining the amount of tape in time and length on a reel in accordance with principles of the invention.

FIG. 6a is a schematic view of an embodiment for home recorded tapes illustrating storing VISS marks on a control track and TPA packets each containing a tape identification number, program number, and absolute address on a vertical blanking interval line and using a directory memory in accordance with principles of the invention.

FIG. 6b is a schematic view of an embodiment for pre-recorded tapes illustrating storing VISS marks on a control track, TPA packets each containing a tape identification number, program number, and absolute address on a vertical blanking interval, and a directory on a vertical blanking interval line in accordance with principles of the invention.

FIG. 6c is a schematic view of an embodiment for retroactively indexed tapes illustrating storing VISS marks on a control track and using a directory memory in accordance with principles of the invention.

FIG. 7 is a schematic conceptually illustrating a directory in accordance with principles of the invention.

FIG. 8a is a schematic conceptually illustrating the information in the D(0) portion of FIG. 7 in accordance with principles of the invention.

FIG. 8b is a schematic conceptually illustrating the information in the D(1) to D(N) portion of FIG. 7 in accordance with principles of the invention.

FIG. 9 is a schematic conceptually illustrating the information in the TPA packet in accordance with principles of the invention.

FIG. 10 is a flowchart showing the steps employed in using the steps of FIG. 3 or 4 during the recording of a home recorded tape in accordance with principles of the invention.

FIG. 11 is a flowchart showing the steps employed in using the steps of FIG. 3 or 4, while retroactively indexing a retroactively indexed tape in accordance with principles of the invention.

FIGs. 12a through 12d are flowcharts showing the steps employed in using the steps of FIG. 5a for accessing programs recorded on a tape in accordance with principles of the invention. FIG. 12b shows the steps employed in accessing programs recorded on a home recorded tape. FIG. 12c shows the steps employed in accessing programs recorded on a pre-recorded tape. FIG. 12d shows the steps employed in accessing programs recorded on a retroactively indexed tape.

FIG. 13a through 13d are flowcharts showing the steps employed for accessing programs recorded on a tape in accordance with principles of the invention. FIGs. 13b, 13c, and 13d are for accessing programs on home recorded, pre-recorded and retroactively indexed tapes, respectively.

FIG. 14 is a flow diagram of a method for testing the accuracy of a technique for locating a position in time along a tape.

## Detailed Description of the Specific Embodiments

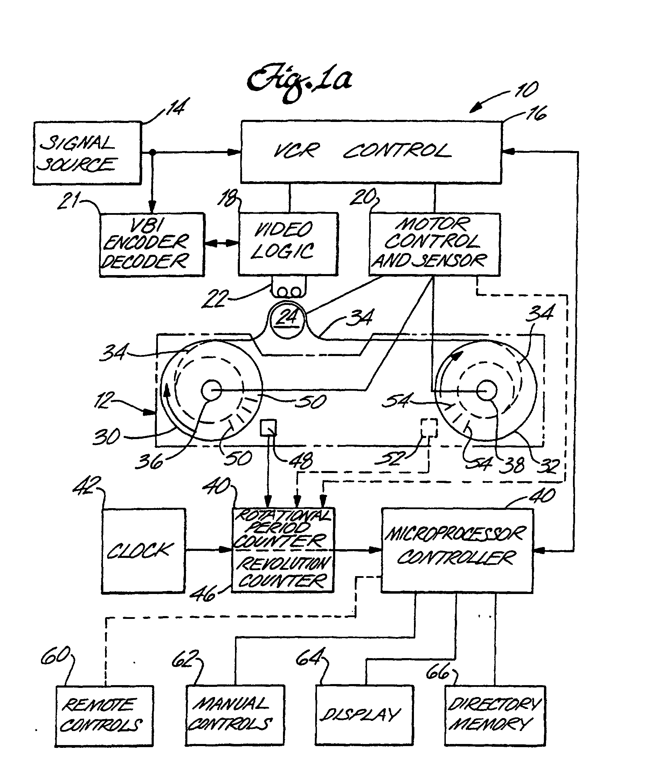

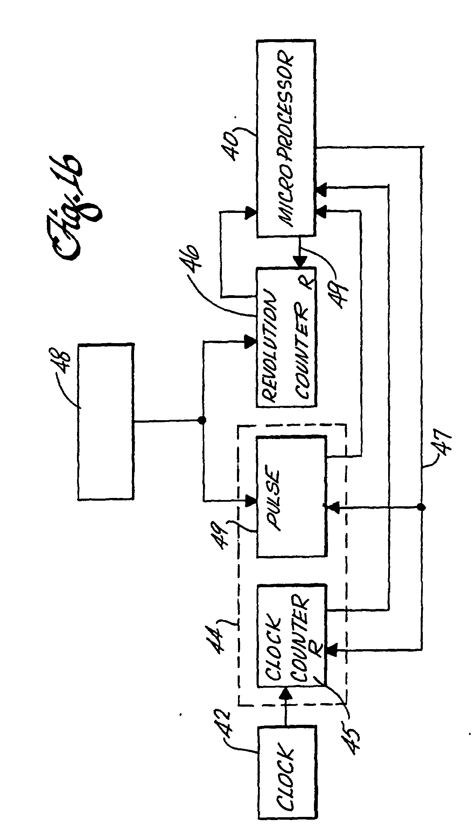

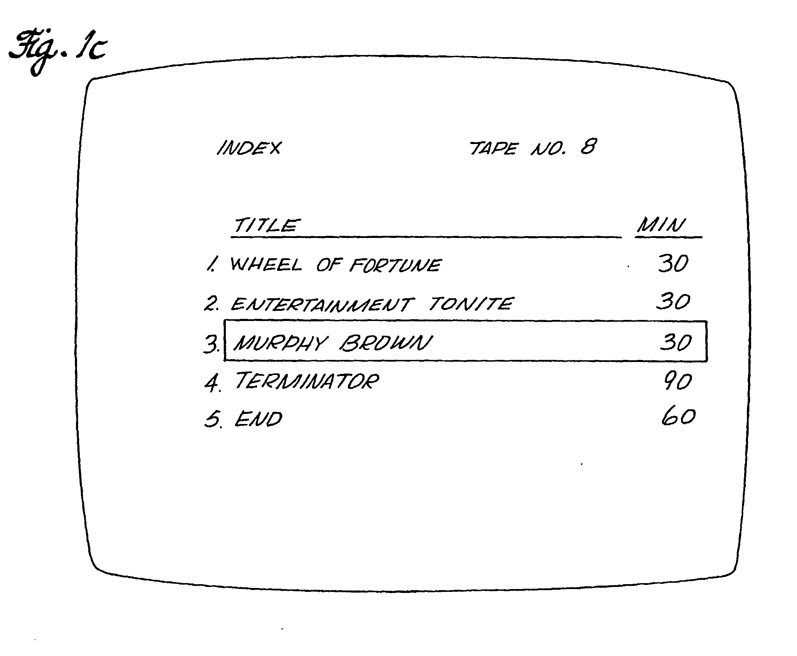

FIG. 1a shows an apparatus for determining an address in time beginning between the beginning of a tape on the reel and the current location on the tape or the start of a program recorded on a recording tape wound around a hub of a reel in accordance with the principles of this invention. The single reel rotational period addressing system 10 includes a magnetic tape cassette 12, which is both written to and read from. The signal source 14 receives signals from a cable or a television broadcast station which are sent to the VCR control logic 16 and can be written onto the magnetic tape cassette 12 via the video logic 18 and the read/write head 22. The VCR control logic 16 also controls the motor control and sensor 20, which operates the winding and unwinding of the reels of the magnetic tape cassette 12 as well as the rotation of capstan 24.

The magnetic tape cassette 12, which can be a video cassette tape, includes a supply reel 30 and a take-up reel 32. The magnetic tape 34 is wound around supply reel 30 and take-up reel 32. During recording onto magnetic tape 34 the tape unwinds from supply reel 30 and is wound onto take-up reel 32. The supply reel 30 has a supply reel hub 36 and the take-up reel 32 has a take-up reel hub 38. As a program is recorded or played, the tape is passed around capstan 24 which is in close proximity to read/write head 22. The capstan 24 is controlled by motor control and sensor 20 to maintain a constant linear tape speed during record and play operations. During rewind and fast forward operations the tape speed is not controlled by the capstan 24 speed but is determined by the supply or take-up reel speeds. Thus, the rewind and fast forward speeds are not controlled as precisely as the play and record speeds. The VCR has another speed called search speed, which is controlled by the capstan 24 and is faster than the play speed.

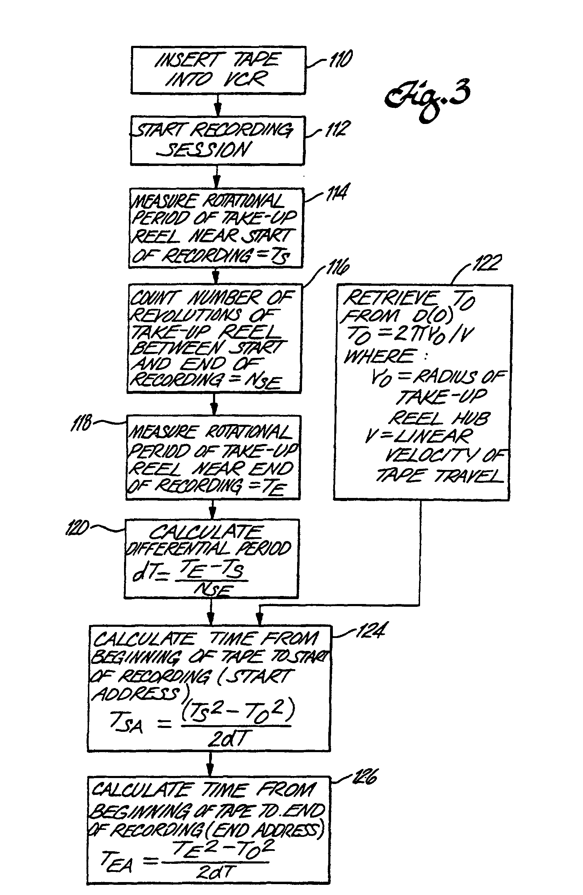

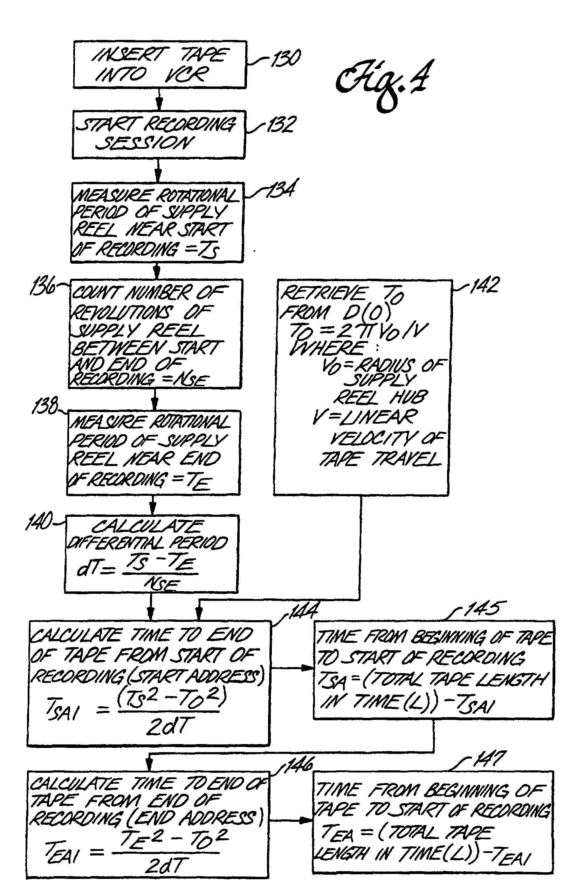

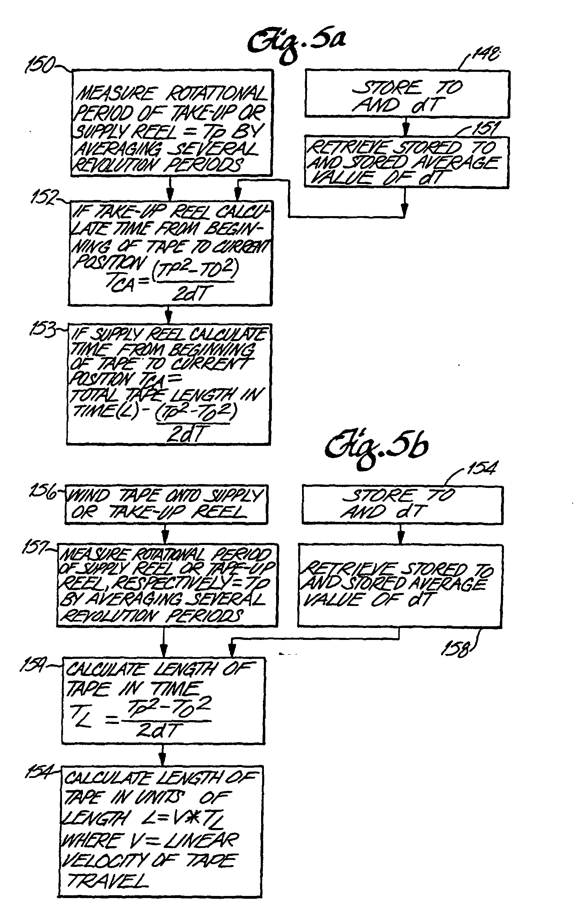

The VCR control logic 16 is coupled to a microprocessor controller 40, which includes a processor, memory, and input output logic. The microprocessor controller 40 is programmed to execute the flow diagrams of FIGS. 3, 4, 5a-b, 10, 11, and 12a-d. The microprocessor controller is also coupled to a rotation period counter 44 and a revolution counter 46. The purpose of the rotation period counter 44 is to measure the rotation period of a reel on the cassette magnetic tape 12. Either the rotation period of the supply reel 30 or the rotation period of the take-up reel 32 can be measured. To measure the rotational period of supply reel 30, reflected light photo optical detector 48 is located adjacent to supply reel 30. A plurality of reflective lines 50 are located on the supply reel 30. As the supply reel 30 rotates the reflected light photo optical detector 48 senses the rotation via the plurality of reflective lines 50.

In this invention it is only necessary to sense the rotational period and the revolution counts of either the take-up reel or the supply reel. If the take-up reel is used rather than the supply reel then reflected light photo optical detector 52 is used in conjunction with the plurality of reflective lines 54 located on the take-up reel 32.

Instead of measuring the rotation period by sensing the reflective lines on the reels, it is also possible to count pulses, which are sent from motor control and sensor 20. In one embodiment 8 pulses are sent from motor control and sensor 20 to rotation period counter 44 and revolution counter 46 for each rotation of the supply or take-up reel.

FIG. 1b is a block diagram of an implementation of the rotation period counter 44 and revolution counter 46 in accordance with principles of the invention. At the beginning of a measurement the microprocessor 40 sends a reset command on line 47 to rotation period counter 44 consisting of clock counter 45 and pulse counter 49. A separate reset command is sent on line 49 to revolution counter 46. Then the number of reflective lines 50 passing by reflected light photo optical detector 48 are counted by pulse counter 49. The clock counter 45 starts counting clock pulses when the pulse counter 49 starts to count and stops counting clock pulses, when the pulse counter 49 has counted an integral number of pulses, for example 16 pulses, from optical detector 48. The clock rate of clock 42 is high compared to the rate of pulses from optical detector 48. To measure the single rotational period of a reel the microprocessor reads the clock counter 45 and the pulse counter 49 simultaneously. This can be done after one entire rotation, a few rotations, or even a fraction of a rotation as long as the fraction represents an integral number of pulses from optical detector 48 which ensures that clock counter 45 is counting clocks for an integral number of pulses for example, 16 pulses and not 16.5 pulses. The microprocessor calculates the rotation period by dividing the value read from clock counter 45 by the value from pulse counter 49 and then dividing by the number of reflective lines 50 around the reel and dividing by the clock rate of clock 42. Each rotation of the reel the revolution counter 46 increments by one. The microprocessor calculates the number of revolutions by simply reading the revolution counter, which counts the number of reflective lines 50 passing by reflected light photo optical detector 48 and dividing by the number of reflective lines 50 around the reel.

As shown in FIG. 1a, a user interfaces with the single reel rotational period addressing system 10 through three mechanisms: the remote controls 60, the manual controls 62, and the display 64 which can be a television monitor. The remote controls 60 and the manual controls 62 can include the normal controls that are in the conventional art for controlling a video cassette recorder. The remote controls 60 and the manual controls 62 in conjunction with the display 64 can be used to provide a user interface that allows a user to address a program on the magnetic tape cassette 12. This can be done by storing a directory to the programs on the magnetic tape cassette 12 either in directory memory 66 or directly on the magnetic tape 34. The directory can be retrieved by controller 40 and displayed on a television monitor.

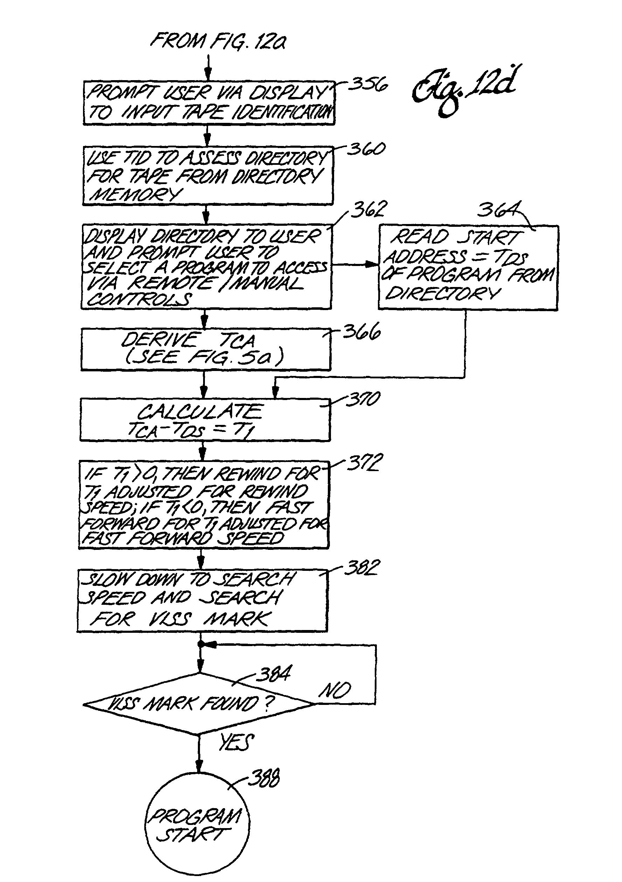

FIG. 1c is an illustration of a display of a directory on a television screen, such as display 64, in accordance with principles of the invention. The user moves a cursor or enters a number corresponding to a program to access a particular program on the tape. For example, in FIG. 1c MURPHY BROWN is shown highlighted, because a cursor has been placed on that entry in the index. The user can also enter the number 3 to access MURPHY BROWN. After selecting a program, the user presses a control button on the remote controls 60 or the manual controls 62 to command the VCR to transport the tape to the address of the start of the selected program. Details for accessing a program are described below in relation to FIGs. 12a-12d.

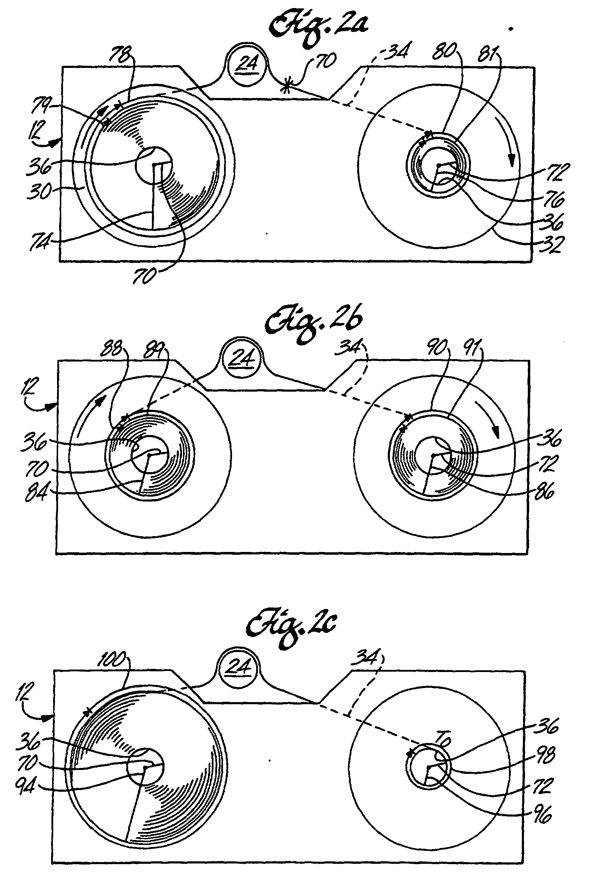

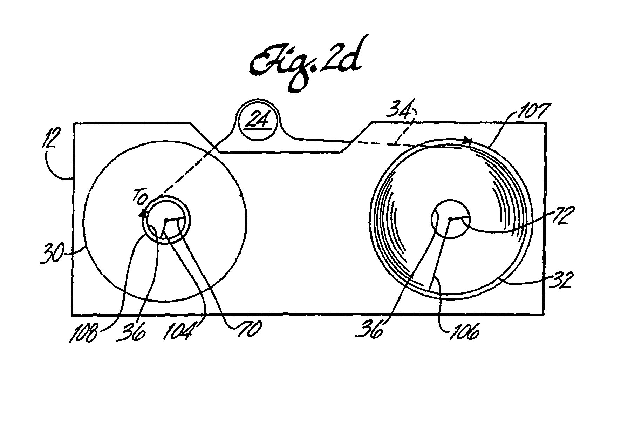

FIGs. 2a through 2d show the amount of tape on each reel of a video cassette tape 12 at various stages of the winding or unwinding of the video cassette tape 12. FIG. 2a is an illustrative diagram showing the amount of tape on each reel of a video cassette tape at the start of a recording session. In FIG. 2a are shown the radius of the supply reel hub 70, the radius of tape on the supply reel at start of program recording 74, the single period of rotation (Tp) of the supply reel 78, and the single period of previous rotation (Tp+dT) of supply reel 79. The difference between the single period of rotation (Tp) of the supply reel 78 and the single period of the previous rotation (Tp+dT) of the supply reel 79 is the differential period or the change of the rotational period between one rotation and the next rotation on the supply reel 30. The differential period of rotation is related to the thickness of magnetic tape 34 and the velocity of tape travel which is normally nominally 33.34 mm per second for SP speed. The thickness of video tape is nominally 19 um for T120 tape.

Also shown in FIG. 2a are the radius of the take-up reel hub 72, the radius of tape on the take-up reel at start of program recording 76, the single period of rotation (Tp) of the take-up reel 80 and the single period of the previous rotation (Tp-dT) of take-up reel 81.

FIG. 2b illustrates the amount of tape on each reel of a video cassette tape at the end of a recording session. If the supply reel is used in conjunction with reflected light photo optical detector 48 and plurality of reflective lines 50, then the parameters of interest are the radius of the supply reel hub 70, the radius of tape on the supply reel at end of program recording 84, the single period of rotation (Tp) of the supply reel 88 and the single period of previous rotation (Tp-dT) of the supply reel 89. If the take-up reel 32 is used in conjunction with the reflected light photo optical detector 52 and the plurality of reflective lines 54, then the parameters of interest are the radius of the take-up reel hub 72, the radius of the tape on the take-up reel at the end of program recording 86, the single period of rotation (Tp) of the take-up reel 90 and the single period of the previous rotation (Tp-dT) of the take-up reel 91. As described before the differential period of rotation is the difference between the single period of rotation (Tp) of the supply reel 88 and the single period of previous rotation (Tp-dT) of the supply reel 89 or between the single period of rotation (Tp) of the take-up reel 90 and the single period of the previous rotation (Tp-dT) of the take-up reel 91, respectively.

FIG. 2c shows the amount of tape on each reel of a video cassette tape 12 when the tape is wound onto the supply reel and virtually no tape is left on the take-up reel. In this state, the radius of tape on the supply reel 94 is at a maximum and the corresponding single period of rotation Tp of the full supply reel 100 is also at a maximum. At the same time the radius of tape on the take-up reel 96 is at a minimum and is virtually identical to the radius of the take-up reel hub 72. In this state the single period of rotation To at the hub of the take-up reel 98 is at a minimum.

Finally, FIG. 2d shows the amount of tape on each reel of a video cassette tape 12 when the tape is wound almost entirely on the take-up reel. In this state, the radius of tape on the supply reel 104 is virtually identical to the radius of supply reel hub 70. The single period of rotation To at the hub of the supply reel 108 is minimal, which corresponds to a maximal rate of rotation for the supply reel. At the same time the radius of tape on the take-up reel 106 is at a maximum and the single period of rotation Tp of the full take-up reel 107 is at a maximum corresponding to a very slow rate of rotation of the take-up reel.

With the foregoing description of the apparatus of the single reel rotational period addressing system 10 and the parameters described in FIGs. 2a through 2d, the single reel rotational period method of deriving addresses on a tape will now be described.

The single reel rotational period (SRRP) method for determining the address on a tape is a random-access type of address measurement method. A video cassette tape or another type of tape that uses reels can be inserted into a recorder/player, such as a VCR, at any random point. There are three parameters in the address measurement. Two of these parameters can be very accurately measured. The third parameter, the differential period, can be measured during a recording. As a result, the method measures a recording's starting address to an accuracy typically better than 1 minute, which is superior to previous random-access measurement methods for a tape.

Consider the following notations:

| | | |
|---|---|---|
| v | = velocity of tape travel, nominally 33.34 mm/sec for | SP speed |
| d | = thickness of video tape, nominally 19 um for T120 | tape |
| $l_s$ | = length of tape from the beginning of the tape to | the start of a recording |
| $r_0$ | = radius of the take-up reel hub, nominally 13 mm | |
| $r_s$ = | radius at the start of a recording, at which $T_S$ is | measured |
| $r_E$ | = radius at the end of a recording, at which $T_E$ is | measured |
| $T_0$ | = rotational period of take-up reel at the hub, i.e. | at the beginning of the tape |
| $T_s$ | = rotational period of take-up reel at the start of | a recording |
| $T_E$ | = rotational period of take-up reel at the end of a | recording |
| $N_{SE}$ | = number of revolutions of the take-up reel between | the start and end of a recording |
| $N_{0S}$ | = number of revolutions of the take-up reel between | the beginning of the tape and the start of a recording |
| dT | = differential period, change of rotational period between one period and the next | |
| t | = time from the beginning of a tape to the start of a recording, which is the address definition in this method | |

The single reel rotational period (SRRP) method assumes the following measurement scenario. A tape is inserted into a recorder player, such as a VCR, possibly in the middle of the tape and the address time from the beginning of the tape is not known. The rotational period of the first revolution $T_S$ is measured using the rotation period counter 44, the reflected light photo optical detector 48 and the plurality of reflective lines 50 for the supply reel, or the reflected light photo optical detector 52, and plurality of reflective lines 54 for the take-up reel. Also, the pulses sent from motor control and sensor 20 can be counted. The number of revolutions between the start and end of the recording, $N_{SE}$, is measured by using revolution counter 46. At the end of the recording, the rotational period of the last revolution $T_E$ is measured in the same manner that $T_S$ is measured.

The average differential period, which is the increase in rotational period per revolution, is then derived as

$$dT = (T_E - T_S) / N_{SE} \qquad (1)$$

Assuming constant thickness of the tape and constant tape velocity, the number of revolutions from the beginning of the tape to the start of the recording is then:

$$N_{0S} = (T_S - T_0) / dT.$$

The address in time from the beginning of the tape to the start of the program is then derived by summing the revolution

periods:

$$t = T_0 + (T_0 + dT) + (T_0 + 2\,dT) + ... (T_0 + N_{0S}\,dT)$$

This becomes :

$$t = ((T_S{}^2 - T_0{}^2) / (2\,dT)) + (T_S + T_0)/2$$

Since To is about 2.489 seconds and Ts ranges from 2.489 seconds to about 7.597 seconds, the second term is at most 5 seconds and can be dropped, so the equation becomes:

$$t = (T_S{}^2 - T_0{}^2) / (2\,dT). \tag{2}$$

Equations (1) and (2) are the two central equations used in the single reel rotational period (SRRP) address measurement method.

Another equation, easily derived, relates the tape thickness d to the differential period dT:

$$dT = 2\,\pi\,d\,/\,v. \tag{3}$$

From equation (2), the accuracy of determining t depends on the three parameters: $T_S$ $T_0$ and dT. It is important to realize that each parameter may contribute to an error in deriving t in three ways: how accurate that parameter can be measured or known, the variability of that parameter due to other factors, and the variability of the parameter due to time. Each of these parameters are examined below.

The variable $T_0$ is calculated by $2\,\pi\,r_0\,/\,v$. It is important to realize that the variability of $r_0$ and v for different cassettes or VCR is not relevant. Rather, what is relevant is the variability of $r_0$ of the same cassette in time and the variability of v for the same VCR over time. The variability of $r_0$ will mainly be due to temperature and should be extremely small. Since the VCR in PLAY or RECORD mode has highly regulated speed, v's variability should also be extremely small. In short, the variability of $T_0$ is very small. Furthermore, considering equation (2), large absolute (i.e. not percentage) error of t occurs when $T_S$ is large, e.g. around 7.5 seconds. In this case, $T_0{}^2$ is about 10% of $T_S{}^2$. Thus the contribution of error from $T_0$'s variability is insignificant. In fact, $T_0$ need not be measured. The nominal value of 2.4887 second can be used in all calculations. Measurements indicate that deviations of actual $T_0$ from this is less than 1.3%, creating a constant offset error of at most 10 seconds in a T120 tape at SP speed.

For a given $r_S$, $T_S$ only depends on v. If v is assumed to have little variability, then $T_S$ will also have little variability. The only error will be due to the accuracy with which $T_S$ can be measured. If the VCR can measure time in milliseconds accurately, then $T_S$ will have an accuracy of 1/2500 to 1/7500. Together with the accuracy as described above for $T_0$, it means that the error contribution from the numerator in equation (2) is less than 0.04%.

The parameter dT, in a sense, measures the average thickness between the $r_S$ and $r_E$. What is really needed in equation 2 is the average value of dT between $r_0$ and $r_S$. The major source of error for equation (2) in fact comes from the assumption that the mean dT between $T_S$ and $r_E$ is the same as the mean dT between $r_0$ and $r_S$.

A typical VCR tape may have accumulated tape on the take-up spool in alternate regions of PLAY and FAST FORWARD. Studies on the variability of dT in the PLAY and FAST FORWARD regions have been performed, using a FUJI AG120 tape in an RCA VR520 VCR. The results indicate that dT has a standard deviation of only about 0.25% between 4 different PLAY regions. However, the dT of the FAST FORWARD regions is on the average 1.57% higher than the mean of dT of the PLAY regions. These values can be used to estimate the errors incurred in the following example. Suppose a tape is inserted into the VCR at roughly the 1.5 hour point and the tape between $r_0$ and $r_S$ is accumulated 1/3 in PLAY mode and 2/3 in FAST FORWARD mode. Using the PLAY MODE dT to estimate the start time will thus overestimate by 1.57 x 2/3 % = 1.05 % , or roughly 0.94 minute.

So far, we have centered on using the take-up reel for measurement. The supply reel can also be used and in fact may be superior to the take-up reel for two reasons. First, the supply reel accumulates tape mostly at one single speed, the REWIND mode, and therefore the tension at which the tape is accumulated on the reel is fairly constant. In contrast the take-up reel accumulates tape at both PLAY speed and the FAST FORWARD speed. As a result the dT for the supply reel does not display as large a difference as the take-up reel. In fact, studies show that the error incurred for the supply reel is typically 1/3 that of the take-up reel. Second, for a blank tape, the initial $T_S$ can be used to determine the length of the tape, i.e. the user does not need to enter the length of the tape as part of the tape initialization process.

The discussion above is about the variability of dT as a result of tape accumulation in PLAY mode or FAST FORWARD or REWIND modes. Next is a discussion about the accuracy with which dT can be measured. For each revolution, dT is about 3.5 msec. If a recording occurs over 40 revolutions (about 5 minutes of recording on the supply reel around the beginning of the tape), total change in period is about 140 msec. If $T_S$ and $T_E$ are each measured over one revolution and if the measurement accuracy of the VCR is 1 millisecond, then the two measurements taken (one for $T_S$ and one for $T_E$) will contribute an error of about 1.41 milliseconds, or 1 %. This error will be in addition to that introduced by the variability of dT. This measurement error can be reduced if $T_S$ and $T_E$ are each measured as an average over several revolutions instead of one.

Based on the above discussions, the conclusions are: $T_0$ can be assumed to be 2.4887 second and does not have to be measured; if a tape machine, such as a VCR, has a clock accuracy of about 1 millisecond, then $T_S$ and $T_E$ should be measured over several or more turns to improve on the measurement accuracy of dT; the first and last turn of a recording should not be used as speed may not be constant yet; the supply reel is preferred over the take-up reel because it produces less error; if a tape is inserted into the VCR and its current position needs to be found out instantly (for search and play purpose), the VCR can make one single turn to find out $T_S$; and if an average value of dT of the tape is stored, this will allow calculation of the current position to better than 1.5 % accuracy.

The method of the present invention was tested for accuracy using a FUJI AG 120 tape. A video camera was used to record the time displayed on a digital watch at SP speed over the whole tape. The tape was then played back on a RCA VR520 VCR and a picture of the digital watch was displayed on a TV, providing a reference, or absolute address, in seconds resolution, of the location on the tape. The VCR provided 8 output pulses per revolution from motor control and sensor 20 for both the supply reel and the take-up reel. These pulses were fed as interrupts to a computer for timing the completion of each revolution of each reel. The number of turns on each reel and the corresponding times were recorded into 2 files, one for the supply reel and one for the take-up reel.

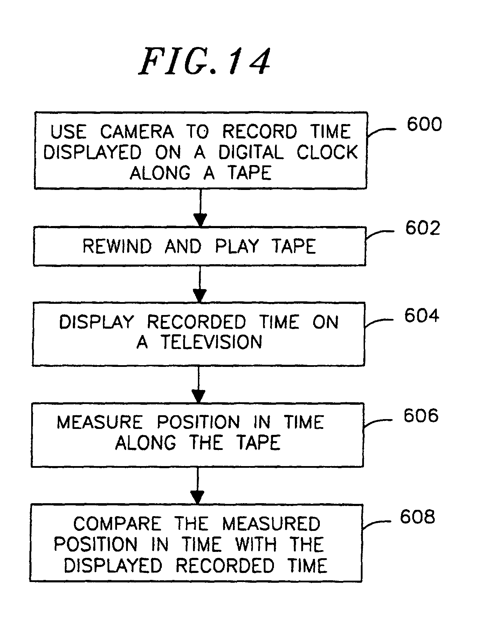

FIG. 14 is a flow diagram of the method used for testing the accuracy of the technique for locating a position in time along a tape. In step 600 a camera is used to record a time displayed on a digital clock along a tape. In step 602 the tape is rewound and played and in step 603 the recorded time is displayed on a television. Then in step 606 the position in time along a tape is measured using some technique and in step 608 the measured position in time is compared with the displayed recorded time.

The tape was played for roughly 15 minutes. During this period, roughly at 2.5 minute intervals, the revolution number was read from the computer screen and the digital watch time was read from the TV screen. After playing for 15 minutes, the VCR was fast forwarded to a position of roughly 40 minutes on the tape and played for 5 minutes. The revolution number and digital time were noted down once at the beginning and once at the end of this period. The VCR was again fast forwarded to roughly 60 minutes on the tape and played for 5 minutes and the procedure repeated. The VCR was then fast forwarded to roughly 110 minutes on the tape. The procedure of noting down the revolution number and the digital time was repeated 4 times until close to the end of the tape. Finally, at the end of the tape, the digital time was noted. The data and analysis are presented as follows for the take-up reel.

| TAKE-UP REEL | | | | | |
|---|---|---|---|---|---|
| N | $T_s$(sec) | dT(usec) | Time(sec) video | Time (sec) calculated | Delta (sec) |
| 58 | 2.65612 | | 143 | 145.0 | 2.0 |
| | | 3490 | | | |
| 102 | 2.80970 | | 264 | 264.9 | 0.9 |
| | | 3491 | | | |
| 162 | 3.01916 | | 439 | 439.3 | 0.3 |
| | | 3507 | | | |
| 196 | 3.13840 | | 543 | 544.2 | 1.2 |
| | | 3505 | | | |
| 250 | 3.32768 | | 717 | 719.0 | 2.0 |
| | | 3487 | | | |
| 296 | 3.48808 | | 874 | 875.1 | 1.1 |
| FAST FORWARD 3537 | | | | | |
| 692 | 4.88858 | | 2539 | 2550.7 | 11.7 |
| | | 3502 | | | |
| 750 | 5.09172 | | 2829 | 2840.3 | 11.3 |

(continued)

| TAKE-UP REEL | | | | | |
|---|---|---|---|---|---|
| N | $T_s$(sec) | dT(usec) | Time(sec) video | Time (sec) calculated | Delta (sec) |
| FAST FORWARD 3559 | | | | | |
| 910 | 5.66118 | | 3694 | 3714.8 | 20.8 |
| | | 3508 | | | |
| 964 | 5.85062 | | 4004 | 4026.3 | 22.3 |
| FAST FORWARD 3569 | | | | | |
| 1368 | 7.29258 | | 6687 | 6733.1 | 46.1 |
| | | 3503 | | | |
| 1404 | 7.41870 | | 6952 | 6998.1 | 46.1 |
| | | 3492 | | | |
| 1422 | 7.48124 | | 7086 | 7131.1 | 45.1 |
| | | 3514 | | | |
| 1436 | 7.53044 | | 7191 | 7236.7 | 45.7 |
| LENGTH OF TAPE : 7368 seconds | | | | | |
| $T_0$    : 2.4575 seconds | | | | | |

$T_S$ is measured as an average of the revolution periods of 5 revolutions. dT is computed simply as the difference between $T_S$ on adjacent rows divided by the difference in N. For example, the dT between row 1 and 2, 3490 usec., is simply (2.8097 - 2.65612)/(102 - 58).

For the four different PLAY regions, dT has a value of 3500.8 + -9.3 usec., which is highly constant. It can be seen that the delta between calculated time and real time is about 1 second within the first 15 minutes PLAY region. The delta jumps to about 11 seconds in the second PLAY region, jumps to about 21 seconds in the third PLAY region, and then jumps to about 46 seconds in the last PLAY region. Within each region, the delta is remarkably constant, to within 1 second. The jumps in the delta can be explained in terms of the increased value of dT in the FAST FORWARD regions between the PLAY regions.

The data and analysis are presented as follows for the supply reel.

| SUPPLY REEL | | | | | |
|---|---|---|---|---|---|
| N | $T_s$(sec) | dT(usec) | Time(sec) video | Time (sec) calculated | Delta (sec) |
| 26 | 7.51924 | | 7172 | 7189.6 | 17.6 |
| | | 3506 | | | |
| 40 | 7.47016 | | 7067 | 7084.8 | 17.8 |
| | | 3479 | | | |
| 64 | 7.38666 | | 6889 | 6908.2 | 19.2 |
| | | 3503 | | | |
| 78 | 7.33762 | | 6786 | 6805.4 | 19.4 |
| | | 3519 | | | |
| 102 | 7.25316 | | 6611 | 6630.0 | 19.0 |
| | | 3530 | | | |
| 124 | 7.17550 | | 6453 | 6470.5 | 17.5 |
| FAST FORWARD 3501 | | | | | |
| 371 | 6.31084 | | 4795 | 4810.3 | 15.3 |
| | | 3516 | | | |
| 420 | 6.13854 | | 4490 | 4504.9 | 14.9 |
| FAST FORWARD 3502 | | | | | |
| 569 | 5.61670 | | 3619 | 3631.6 | 12.6 |
| | | 3517 | | | |

(continued)

| SUPPLY REEL | | | | | |
|---|---|---|---|---|---|
| N | $T_s$(sec) | dT(usec) | Time(sec) video | Time (sec) calculated | Delta (sec) |
| FAST FORWARD 3502 | | | | | |
| 623 | 5.42676 | | 3321 | 3332.9 | 11.9 |
| FAST FORWARD 3588 | | | | | |
| 1228 | 3.25628 | | 647 | 649.8 | 2.8 |
| | | 3519 | | | |
| 1320 | 2.93252 | | 362 | 354.5 | 2.5 |
| | | 3510 | | | |
| 1366 | 2.77106 | | 231 | 233.4 | 2.4 |
| | | 3521 | | | |
| 1398 | 2.65838 | | 131 | 146.3 | 15.0 |
| $T_0$ | = 2.4575 seconds | | | | |

For the four PLAY regions, dT has a value of 3512 + - 14.0 usec., which is highly constant. Within each PLAY region, the delta between calculated time and the real time is almost constant. The deltas between calculated time and real time ranges from about 2 seconds to about 19 seconds, which is better than the deltas in the take-up reel.

FIG. 3 is a flow chart showing the steps employed in determining the start and end address of a program recorded on a tape. The addresses are in time from the beginning of a tape.

In the method of FIG. 3 the start address from the beginning of the tape and the end address of the recording from the beginning of the tape are both determined during the time that the recording session is occurring. This allows the user to insert a tape into the VCR without regard to whether or not the tape is rewound. In step 110 the user inserts the tape into the VCR. In step 112 the user starts the recording session. The reflected light photo optical detector 52, plurality of reflective lines 54 and rotation period counter 44 are used to measure the rotational period of the take-up reel near the start of the recording in step 114. As explained above, pulses from motor control and sensor 20 can also be counted. The rotational period or the single period of rotation of a reel is the amount of time required for the reel to rotate by 360 degrees. For improved accuracy the rotational period of the take-up reel can be measured by averaging a number of take-up reel rotational periods near the start of the recording. In step 116 the number of revolutions of the take-up reel between the start and end of the recording are measured by using revolution counter 46. Near the end of the recording the rotational period of the take-up reel is measured in step 118. Again, for accuracy, the rotational period can be measured by averaging a number of rotational periods near the end of the recording. Then in step 120 the differential period is calculated in the manner indicated equation (1), above, which calculates an average differential period. A predetermined single rotational period of the take-up reel where the radius of the tape on the take-up reel is approximately the same as the radius of the take-up reel hub is accessed from storage in step 122. Then in step 124 the address in time from the beginning of the tape to the start of recording is calculated, according to equation (2), above. In step 126 the time from the beginning of the tape to the end of the recording can be calculated in the same manner as the time from the beginning of the tape to the start of the recording by using equation (2) except that the rotational period of the take-up reel near the end of the recording is used instead of the rotational period of the take-up reel near the start of the recording.

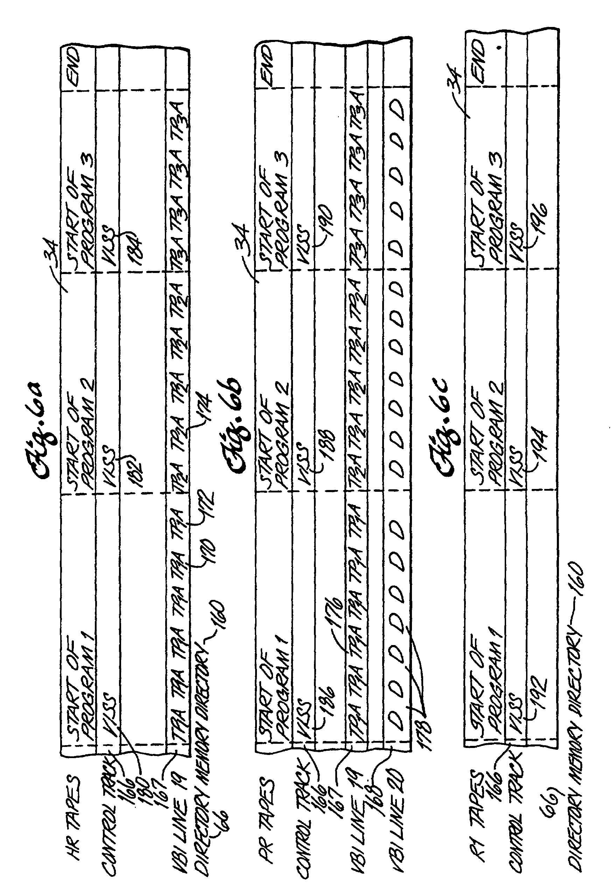

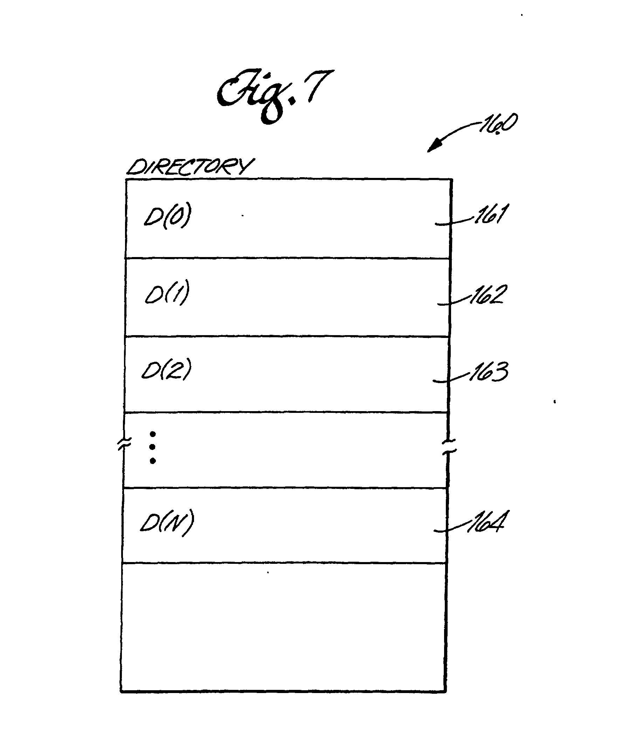

FIG. 4 is a flow chart showing the steps employed in determining the start and end address of a program recorded on a tape in time from beginning of a tape by measuring the rotational period of the supply reel in accordance with the principles of the invention.

The method of FIG. 4 determines the start address from the beginning of the tape and the end address of the recording from the beginning during the time that the recording session is occurring. This allows the user to insert a tape into the VCR without regard to whether or not the tape is rewound. In step 130 the user inserts the tape into the VCR. In step 132 the user starts the recording session. The reflected light photo optical detector 48, plurality of reflective lines 50 and rotation period counter 44 or other techniques described above are used to measure the rotational period of the supply reel near the start of the recording in step 134. In step 136 the number of revolutions of the supply reel between the start and end of the recording are measured by using revolution counter 46. Near the end of the recording the rotational period of the supply reel is measured in step 138. Then in step 140 the differential period is calculated in the manner indicated equation (1), above. A predetermined single rotational period of the supply reel where the radius of the tape on the supply reel is approximately the same as the radius of the supply reel hub is accessed from storage in step 142. Then in step 144 the address in time to the end of the tape from the start of recording is calculated, according to equation (2), above. In step 145 the address in time from the beginning of the tape (defined as when the entire tape is on the supply reel) to the start of the recording is calculated by subtracting from L (the total length of tape) the time from the start of recording to the end of the tape. In step 146 the time to the end of the tape from the end of the recording can be calculated in the same manner as the time to the end of the tape to the start of the recording by using equation (2) except that the rotational period of the supply reel near the end of the recording is used instead of the rotational period of the supply reel near the start of the recording. In step 147 a subtraction is performed to calculate the time from the beginning of the tape to the end of recording.

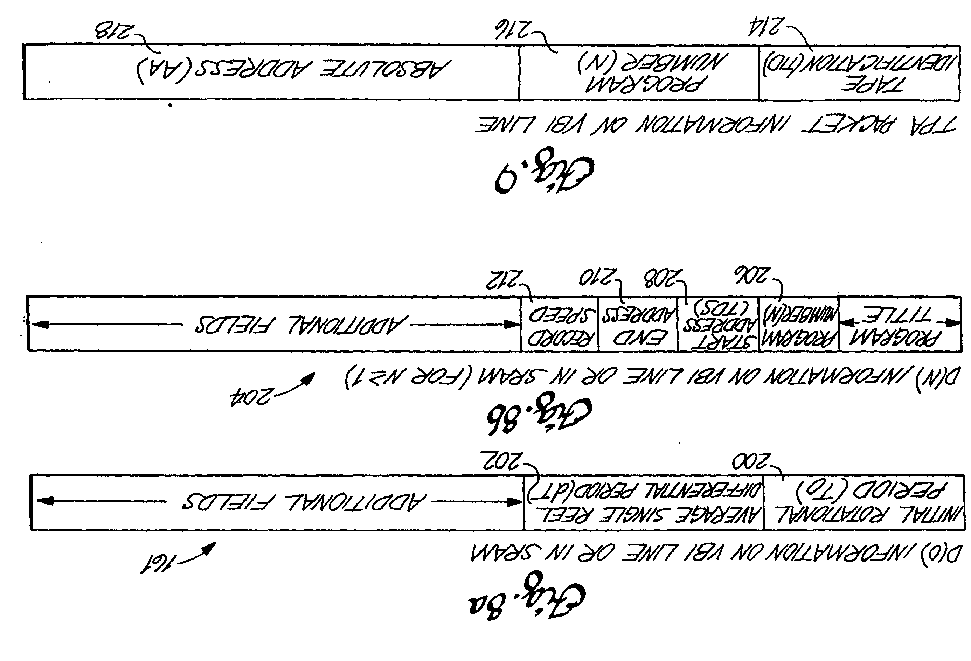

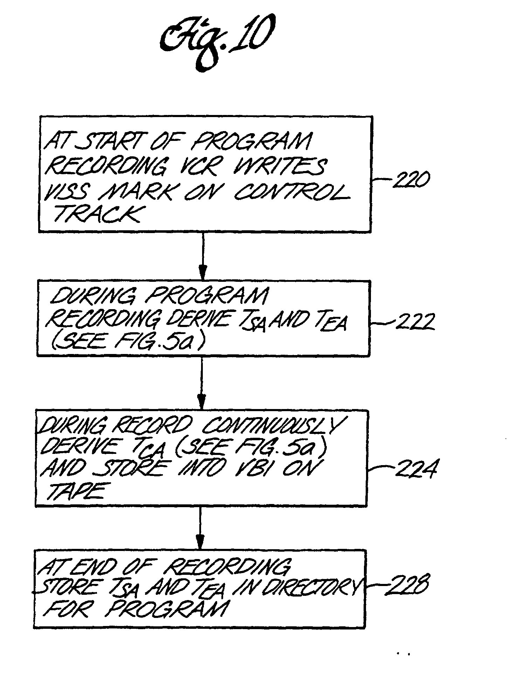

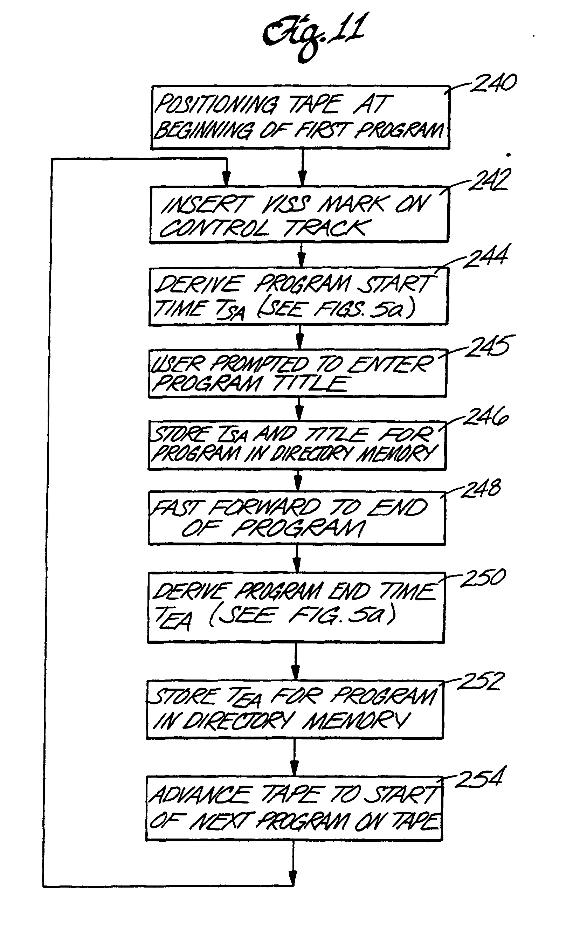

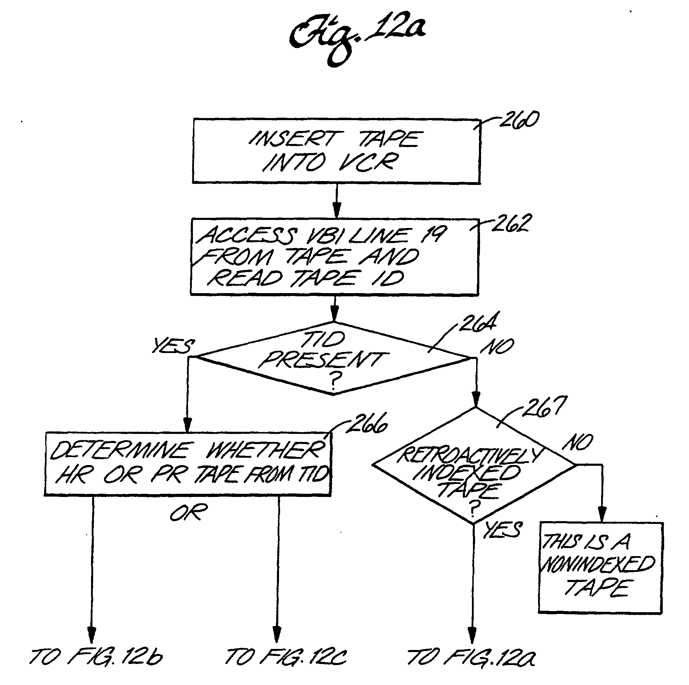

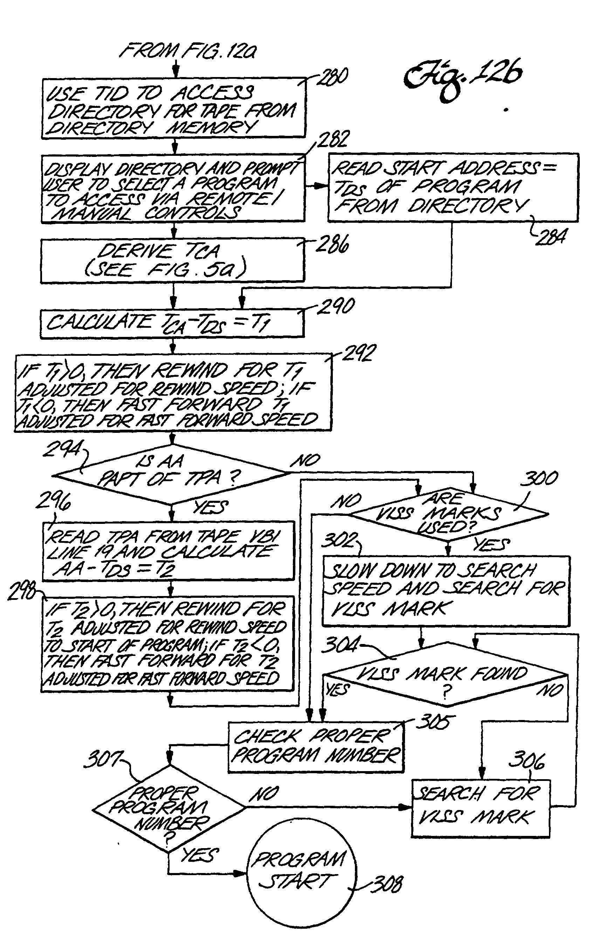

FIG. 5a is a flowchart showing the steps employed in determining the current address in time from the beginning of a tape on a reel in accordance with the principles of the invention. In some situations it may be useful to know the current address in time on a tape even though a program is not being recorded on the tape. To accomplish this the rotational period of one single turn of either the take-up reel or the supply reel is measured in step 150. For accuracy the measurement is performed by averaging the periods of several rotations. In step 151 a predetermined single rotational period of a reel when the radius of the tape on a reel is approximately the same as the radius of the reel hub is accessed from storage. Also in step 151 a predetermined differential period between one rotational period of the reel and the next rotational period of the reel as the tape is wound around or unwound from the reel is accessed from storage.

The single rotational period of the reel when the radius of the tape on the reel is approximately the same as the radius of the reel hub and the average differential period can be measured or assumed to be a value and stored once, as shown in step 148. The single rotational period of the reel when the radius of the tape on the reel is approximately the same as the radius of the reel hub is fairly constant for a particular type of cassette, such as a video cassette tape. The differential period between one rotational period of the reel and the next rotational period of the reel is not a constant over the entire span as the tape is wound or unwound from the reel; however, the differential period has a relatively low variance and an average differential period is sufficient. The differential period can be determined as shown in equation (3) or be derived as shown in FIGS. 3 or 4.

The address in time from the beginning of the tape is derived in step 152, which calculates the time from the beginning of the tape to the current position on the tape according to equation (2), described above. Step 152 is used when the take-up reel is used. When the supply reel is used, then step 153 is used to calculate the time from the beginning of the tape (defined as when the entire tape is on the supply reel) to the current tape address.

For some applications, it is necessary to measure the total length of tape that is in a video tape cassette or to know the time from the beginning of the tape to the end of the tape. One application is to derive the total length of the tape (L) that is used as a parameter in step 153 in FIG. 51. FIG. 5b is a flowchart showing the steps employed in determining the amount of tape in time and length on a reel. In step 156 the tape is wound entirely onto either the supply or the take-up reel. Then, the rotational period of either the supply reel or the take-up reel, respectively is measured in step 157. For accuracy the measurement can be the average of several rotational periods. In step 158 a predetermined differential period between one rotational period of the reel and the next rotational period of the reel is accessed from storage. Again, this predetermined differential period can be an average of the differential periods over the span of winding or unwinding a tape from a reel. Also in step 158 a predetermined single rotational period of either the supply reel or the take-up reel, respectively, when the radius of the tape on the respective reel is approximately the same as the radius of the reel hub is accessed from storage. The predetermined single rotational period of the reel when the radius of the tape on the reel is approximately the same as the radius of the reel hub and the average differential period can be measured or assumed to be a value and stored once, as shown in step 154. In step 159 the length in time from the beginning of the tape to the end of the tape is calculated in the manner indicated in equation (2) described above. In step 154 the length of tape in units of length from the beginning of the tape to the end of the tape can be calculated by multiplying the linear velocity of the tape with the time between the beginning of the tape and the end of the tape as calculated in step 159.

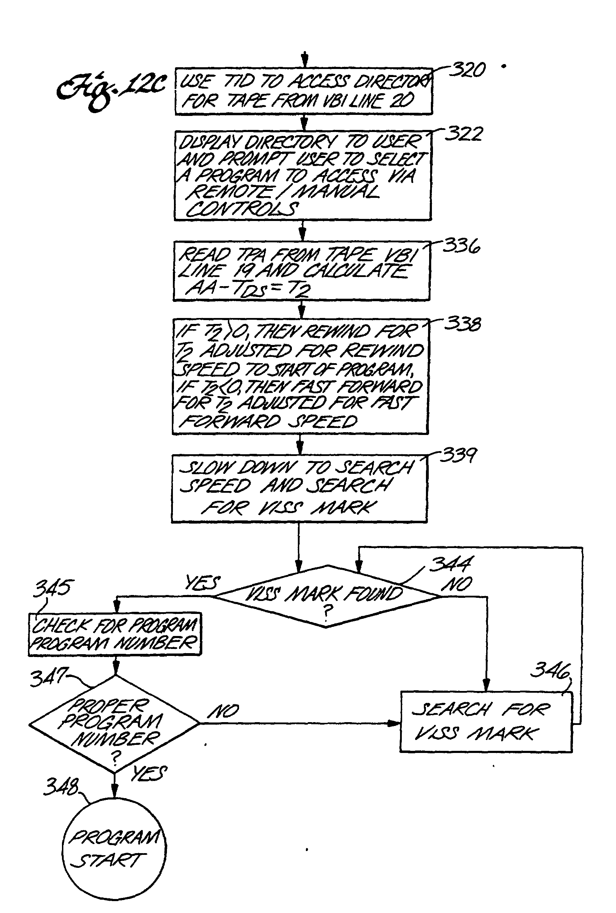

FIGS. 6a, 6b and 6c illustrate the layout of information on a tape for home recorded (HR) tapes, pre-recorded (PR) tapes, and retroactively indexed (RI) tapes. Each of these tape layouts and the method for indexing the tapes will now be described in turn.

FIG. 6a is a schematic view of an embodiment for home recorded tapes illustrating storing VISS marks on a control track and TPA packets each containing a tape identification number, program number, and absolute address on a vertical blanking interval line and using a directory memory in accordance with the principles of the invention. In the case of home recorded (HR) tapes the VISS marks 180, 182, and 184 are placed on control track 166 at the start of each program on the tape 34. On VBI line 19, which is one of the VBI lines on a normal television frame and is designated in FIG. 6a as 167, TPA packets can be written. The information in a TPA packet is shown in FIG. 9 and includes the tape identification 214, the program number 216 and the absolute address 218. The tape identification is a number that identifies the video cassette tape being used. The program number relates to the number of the program that is recorded on the tape adjacent to the TPA packet. In FIG. 6a $TP_3A$ indicates a TPA packet for program number 3. For example, the program MURPHY BROWN, shown in FIG. 1c is program number 3. The absolute address in the TPA packet is an indication of the time from the beginning of the tape to the location on the tape at which the particular TPA packet is written. Since the TPA is written in VBI lines across the tape, the absolute address varies across the tape.

The foregoing description applies to analog VCR tapes. For digital video tapes the same techniques can be applied except that an index block is part of each track and can be used instead of vertical blanking interval lines for storing the TPA packets.

The directory memory 66 which is coupled to microprocessor 40, as shown in FIG. 1a contains a directory 160,as shown in FIG. 6a. The directory information is shown in FIG. 7, and contains a D(0) portion, which contains certain parameters, and D(1) to D(N) portions, which are directory entries for each program. The D(0) portion of the directory 161 is shown in more detail in FIG. 8a. As shown in FIG. 8a, a previously measured and stored predetermined single rotational period of the reel when the radius of the tape on the reel is approximately the same radius of the reel hub can be stored in location 200. In location 202 of D(0) a predetermined differential period between one rotational period of the reel and the next rotational period of the reel as a recording tape is wound around or unwound from a reel can be stored. The predetermined differential period is an average and can be derived according to equation (3) above, or calculated as shown in step 120 of FIG. 3 or step 140 of FIG. 4.

Each entry D(1) 162 and D(2) 163 to D(N) 164 is used to store information about a program stored on the recording tape as shown in FIG. 8b. For example, the program number 206, the start address 208, the end address 210 and the record speed for that program 212 can be stored in the directory.

FIG. 10 is a flowchart showing the steps employed during the recording of a home recorded tape in accordance with the principles of this invention. The VISS marks 180, 182, and 184 are placed automatically by the VCR at the start of a program recording. In step 222 the start address of the beginning of the program and the end address of the end of the program can be determined using the method described in FIG. 5a.

In addition, while the program is being recorded the steps described in FIG. 5a can be used to continuously derive the address in time of the current position of a tape from the beginning of the tape. In step 224, the derived current address can be stored onto the VBI line 19 of the tape as part of the TPA packet on the tape; for example, the derived current address can be stored in location 218 of the TPA packet format as shown in FIG. 9.

At the end of the recording, the start and end addresses for the program are stored in the directory in step 228. For example, if program 2, as shown in FIG. 6a is being recorded, then the start address and the end address of the program on the tape is stored into location 208 and 210, respectively of D(2) 163 in the directory. The combination of VISS marks TPA information and the information stored in the directory can be used later to access the program from the home recorded tape. This is described in further detail below in the description of FIG. 12.

FIG. 6b is a schematic of an embodiment for pre-recorded (PR) tapes illustrating storing VISS marks on a control track, storing TPA packets each containing a tape identification number, program number, and absolute address on a vertical blanking interval, and storing a directory in the vertical blanking interval lines in accordance with the principles of the invention. In FIG. 6b VISS marks 186, 188 and 190 are again placed in the control track 166 at the start of the programs. This can be done at the time the pre-recorded tape is produced or copied from a master tape. On a pre-recorded tape the TPA packets 176 are previously stored onto the tape on vertical blanking interval line 19 which is designated as 167 in FIG. 6b. In the case of pre-recorded tapes the TPA packets will already contain the appropriate tape identification number, program number and absolute address which, of course, will change over the length of the tape. The directory 178 has the same information as directory 160 and is previously stored onto the tape in vertical blanking interval line 20 which is designated as 168 in FIG. 6b. This is a key difference between home recorded and pre-recorded tapes. In a home recorded tape the directory is stored in directory memory 160. In a pre-recorded tape the directory is stored on the tape in the VBI lines. For a digital VCR tape the TPA packets and directory are stored in an index block for each track rather than the VBI lines.

The directory 178 has the same information as described before in FIG. 7 and has a D(0) entry and D(1) to D(N) entries for each program recorded on the pre-recorded tape. The directory may be stored in one VBI line 20 or in multiple VBI lines, as required, and is repeated along the tape length.

The method of using the steps of FIG. 5a for accessing a program on a pre-recorded tape will be described below in connection with the description of FIG. 12.

FIG. 6c is a schematic view and embodiment for retroactively indexed (RI) tapes illustrating storing VISS marks on a control track and using a directory memory in accordance with the principles of the invention. As shown in FIG. 6c, VISS marks 192, 194 and 196 can be placed at the start of each program. Also a directory 160 is stored in directory memory 66.

FIG. 11 is a flowchart showing the steps employed for retroactively indexing a tape in accordance with the principles of the invention. A retroactively indexed tape has programs which were recorded without any index to the programs being recorded or stored in any directory. The purpose of retroactively indexing is to create such an index so that the programs may more easily be accessed. In step 240 the user uses remote controls 60 or manual controls 62 to position the tape at the beginning of the first program to be indexed. The user then inserts a VISS mark on the control track 166 of the tape as shown in step 242. The program start address is then derived using the steps of FIG.

5a in step 244. The user is then prompted to enter the program title in step 245. In step 246 the start address and the title are stored in the directory memory 66 in the location for the program being indexed. The user can then skip to step 254 to advance the tape to the start of the next program and repeat steps 242-246. To access the program the user only needs the start address; however if the user wants to also determine and store the end address of the program, then steps 248 - 252 can be executed. The user uses remote controls 60 or manual controls 62 to fast forward to the end of the program as shown in step 248. Then, the steps of FIG. 5a are used to derive the program end address in time from the beginning of the tape as shown in step 250. A simplification is to use the start address of the next program as the end address of the preceding program. In step 252 the end address in time from the beginning is stored in directory memory 66 in the location for the program being indexed. In step 254 the user can advance the tape to the start of the next program on the tape using remote controls 60 or manual controls 62 and then continue with the procedure by recycling to step 242. In this manner the directory for the tape is created in directory memory 66.

FIGs. 12a through 12d are flowcharts showing the steps employed in using the steps of FIG. 5a to assist in accessing programs recorded on a tape in accordance with the principles of the invention. FIG. 12b shows the steps employed in accessing programs recorded on a home recorded tape. FIG. 12c shows the steps employed in accessing programs recorded on a pre-recorded tape. FIG. 12d shows the steps employed in accessing programs stored on a retroactively indexed tape.

In general it is not known when inserting a tape into a VCR whether the tape is a home recorded tape a pre-recorded tape or a retroactively indexed tape. After inserting the tape into the VCR as shown in step 260, the next step is to determine which type of tape has been inserted. In step 262 the VBI line 19 is accessed and read from the tape and a tape identification number is read from the TPA packet. In step 264, it is determined whether a TPA packet with a tape identification number is present on the tape. Some searching along the tape for a TPA packet may be performed. If there is no tape identification present on the tape then in step 267 the user is prompted to respond whether this is a retroactively indexed tape. If the tape is a retroactively indexed tape, then the next steps are as shown in FIG. 12d, otherwise this is a nonindexed tape and the VCR operates in a conventional manner. If the tape identification is present then the tape identification is examined to determine whether the tape is a home recorded tape or a pre-recorded tape. Pre-recorded tapes have a unique set of tape identification numbers, which allows them to be distinguished. If the tape is a home recorded tape then the next steps are as shown on FIG. 12b. However, if the tape is a pre-recorded tape then the next steps are as shown in FIG. 12c.

Assuming the tape is a home recorded tape, then in step 280 of FIG. 12b, the tape identification is read from the tape and used to access the directory for that tape from the directory memory 66, because the directory memory can store multiple directories for multiple tapes. In step 282 the information from the directory is displayed to the user on display 64 and the user selects a program to access via the remote controls 60 or the manual controls 62. FIG. 1c shows an example display. The user can select a program by positioning a cursor or entering a number. For example, as shown in FIG. 1c, the user can use a cursor to select MURPHY BROWN or enter the number 3. In step 286 the steps of FIG. 5a are used to derive the current address in time from the beginning of the tape. In step 284, the start address ($T_{DS}$) 208 is read from directory memory 66 for the program being accessed. In step 290 the difference between the current address in time and the start address in time of the program being accessed is calculated. In step 292 if the difference in the current address and the start address is positive, then the tape is rewound for the difference in time and if the difference in time is negative then the tape is fast forwarded for the difference in time adjusted for rewind or fast forward speeds. At this point the tape should be positioned near the start of the program. The positioning of the tape can be further refined for home recorded tape by using the absolute addresses recorded as part of the TPA packets on the tape and also by using the VISS marks on the tape. Although a TPA packet may be on the home recorded tape, the absolute address (AA) part of the TPA packet is optional and may not be used. In step 294 a test is done to see whether the absolute address is part of the TPA packet. If not, then the next steps is step 300 to determine whether VISS marks are used. If the absolute addresses are part of the TPA packet, then the next step is 296 which reads the absolute address (AA) from the TPA packet and calculates the difference between the absolute address of the current position of the tape and the start address of the program as stored in the directory memory 66. This is used in step 298 to either rewind the tape or to fast forward the tape for the difference in time adjusted for rewind/fast forward speeds between the absolute address and the program start address stored in the directory. At that point, the tape is at the program start address. If VISS marks are used then in step 302 the speed is slowed down to search speed while searching for a VISS mark, because the control track can not be read at fast forward or rewind speeds. If no VISS mark is found in step 304 then a search continues to find the next VISS mark. When a VISS mark is found then program number is checked in steps 305 and 307 to determine whether the program number read from the TPA packet matches the program number selected by the user. If yes, then the tape is at the program start, otherwise the VCR will search for the next VISS mark.

If the tape is a pre-recorded tape then the steps of FIG. 12c are used. In step 320 the tape identification is used to access the proper directory for the tape from VBI line 20 designated as 167 in FIG. 6b. In step 322 the directory information is displayed to the user, as shown in FIG. 1c and the user selects a program to access on the tape. The user can do this using the remote controls 60 or the manual controls 62. Then in steps 336 and 338, the absolute address is read from the TPA packet and a difference between the program address and the absolute address on the tape is calculated and is used to either rewind or fast forward the tape to the program start which is performed in step 338. Then in step 339 the tape is slowed to search speed to search for a VISS mark in step 344 and if a VISS mark is found then the VCR slows down to play speed to read the program number from the TPA packet and check for equality with the program number selected by the user. If the program numbers match, then the tape is at the proper start address, otherwise the tape is forwarded or rewound in search speed to the next VISS mark until the current program number is found.

If the tape is a retroactively indexed tape then, because there are no TPA packets recorded on the tape, the user is prompted via display 64 to input via the remote controls 60 or the manual controls 62, the tape identification number in step 356 in FIG. 12d. The tape identification number is a number the user assigned to the tape when retroactively indexing the tape and is used in step 360 to access a directory for the tape from the directory memory 66. Then in step 362 the directory is displayed to the user on display 64, as shown in FIG. 1c and the user selects a program to access. The user can select a program via remote controls 60 or manual controls 62. The steps of FIG. 5a are then used to determine the current address of the tape and time from the beginning of the tape, in step 366. In step 364 the start address for the program to be accessed is read from the directory memory 66. In step 370 the difference between the current address in time on the tape and the start address of the program to be accessed is calculated and in step 372 the tape is either rewound or fast forwarded by the difference in time. A search is done at search speed for a VISS mark in step 382. Once a mark is found in step 384 then the tape is at the program start.

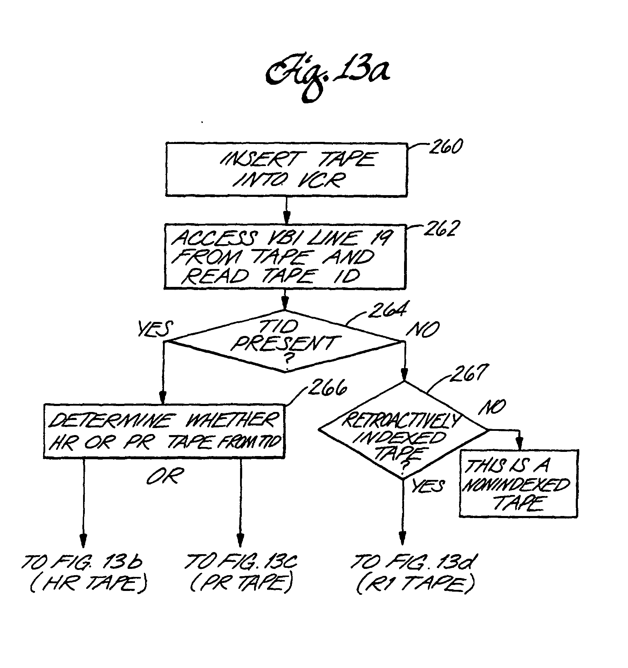

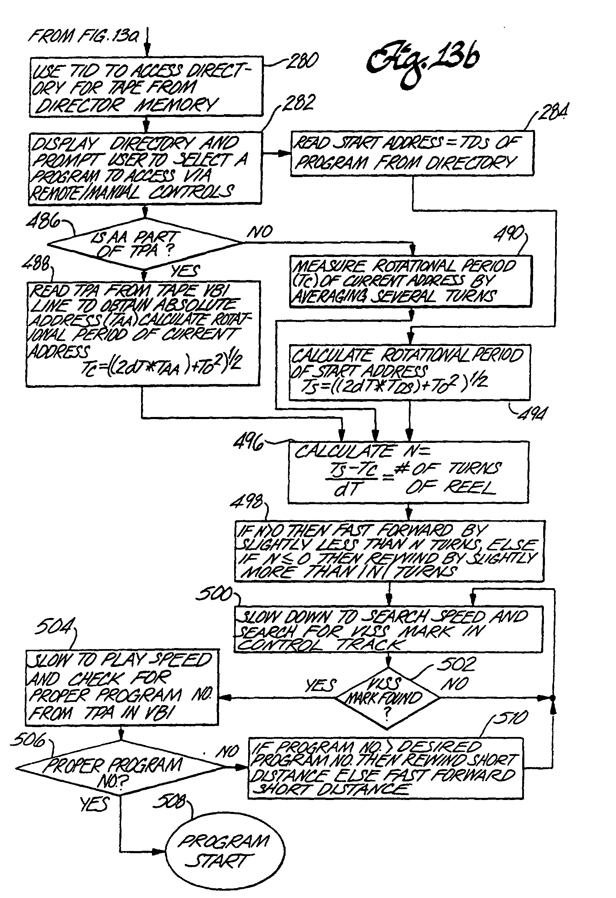

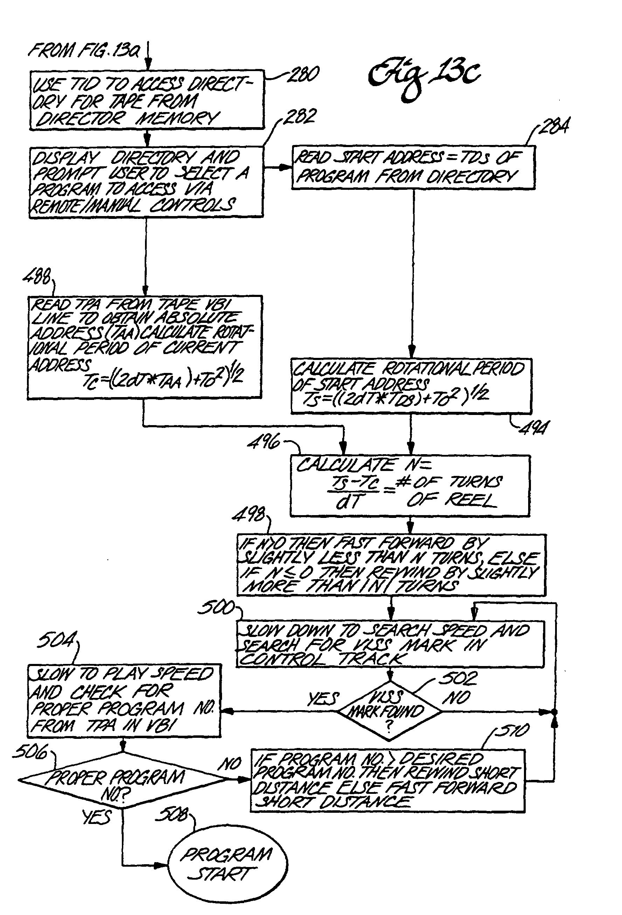

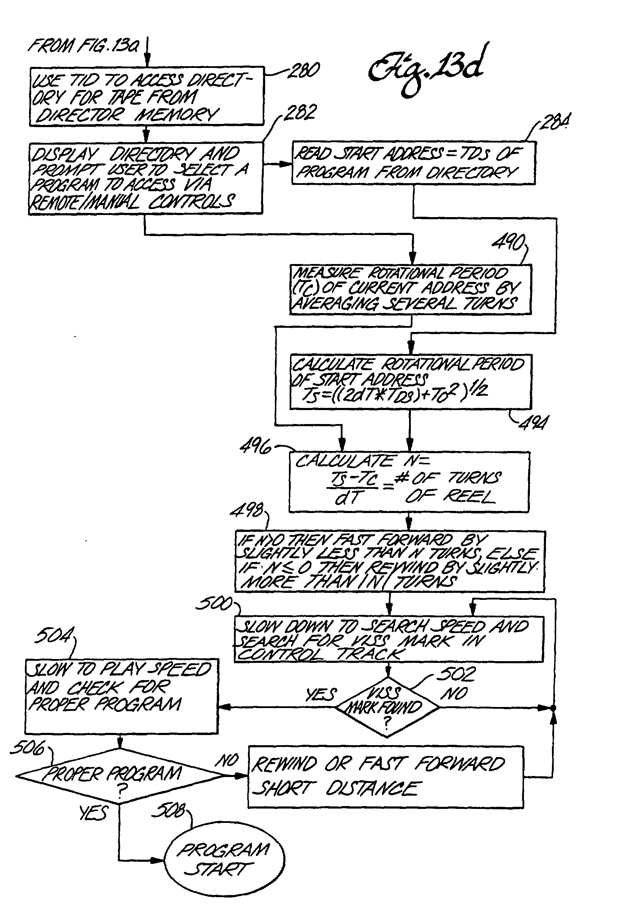

FIGs. 13a through 13d are flowcharts showing another method to access programs recorded on a tape in accordance with the principles of the invention. FIG. 13b shows the steps employed in accessing programs recorded on a home recorded tape. FIG. 13c shows the steps employed in accessing programs recorded on a pre-recorded tape. FIG. 13d shows the steps employed in accessing programs stored on a retroactively indexed tape.

In the same manner as shown in FIG. 12a, in FIG. 13b it is determined whether the tape is a home recorded tape, a pre-recorded tape, or a retroactively indexed tape. The steps are the same as in FIG. 12a except that if the tape is a home recorded tape then the next steps are as shown on FIG. 13b, if the tape is a pre-recorded tape then the next steps are as shown in FIG. 13c, and finally if the tape is a retroactively indexed tape then the next steps are as shown in FIG. 13d.

Assuming the tape is a home recorded tape, then in step 280 of FIG. 13b, the tape identification is read from the tape and used to access the directory for that tape from the directory memory 66. In step 282 the information from the directory is displayed to the user on display 64 and the user selects a program to access via the remote controls 60 or the manual controls 62. FIG. 1c shows an example display. In step 284, the start address ($T_{DS}$) 208 is read from directory memory 66 for the program being accessed.

In step 486 it is determined whether the absolute address (AA) is part of a TPA packet in VBI line 19 of the tape. If the absolute address is part of the TPA packet then in step 488 the TPA packet is read from the tape VBI line to obtain the absolute address $T_{AA}$. The formula shown in step 488 of FIG. 13B is then used to calculate the single rotational period of tape at the absolute address and this is entered into the parameter $T_c$. If on this tape the absolute address is not part of the TPA packet then the single rotational period of the current address is measured in step 490 by averaging several turns. Then in step 494 the start address $T_{DS}$ is used in the equation shown in step 494 of FIG. 13b to calculate the rotational period of the tape at the start address. Then in step 496 the number of turns between the start address of the program being accessed and the current address is calculated according to the formula shown in step 496. The in step 498, if N is greater than zero, then the tape is fast forwarded by slightly less than N turns, or if N is equal or less than zero, then the tape is rewound by slightly more than the absolute value of N turns. At this point the tape should be positioned just before the program to be accessed. In step 500 the tape is slowed down to search speed and a search is performed for a VISS mark in the control track. In step 502 if a VISS mark is found then in step 504 the tape is slowed down to play speed and the TPA packet in the VBI line 19 is accessed and the program number is checked to determine whether it is the proper program number corresponding to the program being accessed. If it is the proper program number as determined in step 506, then the program start address has be arrived at as shown in step 508. If the program number is not the correct program number then in step 510 if the program number is greater than the desired program number then the tape is rewound a short distance. On the other hand, if the program number is less than the desired program number than the tape is fast forwarded for a short distance. Then step 500 is repeated and the tape is slowed down to search speed to search for a VISS mark in the control track. Once a VISS mark is found then steps 504 and 506 are repeated and if necessary steps 510 and 500 are again repeated. Eventually, in this method the program start address on the tape is arrived at and the program can be played.

FIG. 13c shows the steps employed in accessing programs recorded on a prerecorded tape. FIG. 13c is very similar to the method for accessing a program on a home recorded tape shown in FIG. 13b. The primary difference is that in FIG. 13c steps 486 and 490 of FIG. 13b have been eliminated. The reason for this is that for a pre-recorded tape it is known that the absolute address is part of the TPA packet so step 488 is performed and the result used in step 496 to determine the number of turns of the reel to access the start address of the program. The remaining steps in FIG. 13c are the same as the corresponding steps in FIG. 13b.

FIG. 13d shows the steps employed in accessing programs recorded on a retroactively indexed tape. In the case of a retroactively indexed tape, absolute addresses are not recorded in the VBI lines of the tape. Therefore steps 486 and 488 of FIG. 13b are eliminated in the case of FIG. 13d. In step 490 the rotational period $T_c$ of the current address is measured by averaging several turns of the reel. The result of the rotational period measurement is then used in step 496 to calculate the number of turns of the reel necessary to advance or rewind to the start address of the desired program. The remaining steps shown in FIG. 13d are similar to the corresponding steps in FIG. 13b except that steps 504 and 510 are slightly modified, because a TPA packet with a program number is not present on a retroactively indexed tape. Thus, instead of searching for the correct program number, the user searches for the correct program itself.

## Claims

1. An apparatus for determining the address in time of a current location along a recording tape running at constant tape speed relative to the beginning of the tape on a reel (30, 32) comprising:

   means (44) for measuring a single rotational period of the reel (30, 32) near a first location along the tape being represented as Tp; **characterized by**
   means (40) for storing a single rotational period of the reel (30, 32) when the radius of the tape on the reel (30, 32) is approximatly at a minimum being represented as To;
   means (40) for deriving an average time difference between one rotational period of the reel (30, 32) and the next rotational period of the reel (30, 32) as the tape is wound around or unwound from the reel (30, 32) being represented as dT;
   and
   means (40) for deriving from Tp, To and dT, an address in time from the beginning of the tape to the first location on the tape represented as Tc, the value Tc being obtained by the equation

$$Tc = (Tp^2 - To^2)/(2 * dT).$$

2. The apparatus of claim 1 in which the first location is a start address for a program recorded on a recording tape wound around a hub (36, 38) of a reel (30, 32) as the program is recorded, and wherein:

   the means (44) for measuring a single rotational period of the reel (30, 32) measure a single rotational period near a start of the recording of the program being represented as Ts;
   the means (40) for deriving an average time difference comprise:

   means (46) for counting the number of revolutions of the reel (30, 32) between the start and an end of the recording, the number of revolutions being represented as N;
   means (44) for measuring a single rotational period of the reel (30, 32) near the end of the recording of the program being represented as Te;
   means (40) for calculating an average time difference between one rotational period of the reel (30, 32) and the next rotational period of the reel (30, 32) as the recording tape is wound around or unwound from the reel (30, 32) being represented as dT by using Ts, N and Te; and

   the means (40) for deriving an address in time derive from Ts, dT and To the start address being represented by Tsa as the time between the beginning of the tape on the reel (30, 32) and the start of recording of the program recorded along the recording tape, the value Tsa being obtained by the equation

$$Tsa = (Ts^2 - To^2)/(2 * dT).$$

3. The apparatus of Claim 2, additionally comprising means (40) for deriving from Te, dT and To, the end address of the program being represented by Tea as the time between the beginning of the tape on the reel (30, 32) and the end of recording of the program recorded along the recording tape.

4. The apparatus of Claim 3, additionally comprising means (40) for subtracting Tsa from Tea to determine the length of the program.

5. The apparatus of Claim 2, in which the means for measuring a single rotational period of the reel near a start of the recording of the program being represented as Ts comprises:

> means (20, 48, 52) for generating pulses as the reel rotates;
> a rotational period counter means (44) coupled to the means (20, 48, 52) for generating pulses for measuring time for a rotation of the reel; and
> a clock (42) coupled to the rotational period counter (44).

6. The apparatus of Claim 5, in which the means for counting the number of revolutions of the reel between the start and an end of the recording, the number of revolutions being represented as N comprises a revolution counter means (46) coupled to the means (20, 48, 52) for generating pulses for counting the revolutions of the reel.

7. The apparatus of Claim 2, in which the means for measuring a single rotational period of the reel near a start of the recording of the program being represented as Ts comprises:

> a plurality of reflective lines (50, 54) on the reel (30, 32);
> optical detector means (48, 52) for sensing the passing of the reflective lines (50, 54) as the reel (30, 32) rotates;
> a rotational period counter means (44) coupled to the optical detector means (48, 52) for measuring a time for a rotation of the reel (30, 32); and
> a clock (42) coupled to the rotational period counter (44).

8. The apparatus of Claim 2, in which the means for calculating an average time difference between one rotational period of the reel and the next rotational period of the reel as the recording tape is wound around or unwound from the reel being represented as dT by using Ts, N and Te comprises processor means (40) for obtaining a value dT corresponding to

$$dT = (Te - Ts)/N.$$

9. The apparatus of Claim 2, in which the means for deriving from Ts, dT and To, the start address being represented by Tsa as the time between the beginning of the tape on the reel and the start of recording of the program recorded along the recording tape comprises processor means (40) for obtaining a value Tsa corresponding to

$$Tsa = (Ts^2 - To^2)/(2 * dT).$$

10. The apparatus of Claim 3, in which the means for deriving from Te, dT and To, the end address of the program being represented by Tea as the time between the beginning of the tape on the reel and the end of recording of the program recorded along the recording tape additionally comprises processor means (40) for obtaining a value Tea corresponding to

$$Tea = (Te^2 - To^2)/(2 * dT).$$

11. The apparatus of Claim 1 or 2, in which the tape is wound around a suppy reel (30) and a take-up reel (32) in a cassette (12).

12. A method for determining the total length in time of a recording tape running at constant tape speed and wound between a supply reel (30) having a hub (36) and a take-up reel (32) having a hub (38) comprising the steps of:

> winding (156) the entire length of tape onto either the supply reel (30) or the take-up reel (32);
> measuring (157) a single rotational period being represented as Tp of the reel (30, 32) upon which the tape is wound;
> storing (154) a single rotational period of the reel (30, 32) when the radius of the tape on the reel is approximatly at a minimum being represented as To;

deriving an average time difference between one rotational period of the supply or take up reel (30, 32) and the next rotational period of the supply or take up reel (30, 32) as the tape is wound around the supply or take up reel being represented as dT; and

deriving (159) from Tp, To and dT the total length in time from the beginning of the tape to the end of the tape represented by Tl, the value Tl being obtained by the equation

$$Tl = (Tp^2 - To^2)/(2 * dT).$$

**Patentansprüche**

1. Vorrichtung zur Bestimmung der zeitlichen Adresse einer aktuellen Stelle entlang einem Aufzeichungsband, das in Bezug auf den Anfang des Bands auf einer Spule (30, 32) mit konstanter Bandgeschwindigkeit läuft, umfassend:

   Mittel (44) zum Messen einer Einzeldrehperiode der Spule (30, 32) in der Nähe einer ersten Stelle entlang dem Band, die als Tp dargestellt wird; **gekennzeichnet durch**

   Mittel (40) zum Speichern einer Einzeldrehperiode der Spule (30, 32), wenn sich der Radius des Bands auf der Spule (30, 32) ungefähr bei einem Minimum befindet, die als To dargestellt wird;

   Mittel (40) zum Ableiten einer mittleren Zeitdifferenz zwischen einer Drehperiode der Spule (30, 32) und der nächsten Drehperiode der Spule (30, 32), während das Band um die Spule (30, 32) herumgewickelt oder von dieser abgewickelt wird, die als dT dargestellt wird; und

   Mittel (40) zum Ableiten einer zeitlichen Adresse vom Anfang des Bands zu der ersten Stelle auf dem Band aus Tp, To und dT, die als Tc dargestellt wird, wobei der Wert Tc **durch** die folgende Gleichung bestimmt wird:

   $$Tc = (Tp^2 - To^2)/(2 * dT).$$

2. Vorrichtung nach Anspruch 1, bei der die erste Stelle eine Startadresse für ein Programm ist, das auf einem Aufzeichnungsband aufgezeichnet wird, das während der Aufzeichnung des Programms um eine Nabe (36, 38) einer Spule (30, 32) gewickelt wird, und wobei

   die Mittel (44) zum Messen einer Einzeldrehperiode der Spule (30, 32) eine Einzeldrehperiode in der Nähe eines Starts des Aufzeichnens des Programms messen, die als Ts dargestellt wird;

   die Mittel (40) zum Ableiten einer mittleren Zeitdifferenz folgendes umfassen:

   Mittel (46) zum Zählen der Anzahl von Umdrehungen der Spule (30, 32) zwischen dem Start und einem Ende der Aufzeichnung, wobei die Anzahl von Umdrehungen als N dargestellt wird;

   Mittel (44) zum Messen einer Einzeldrehperiode der Spule (30, 32) in der Nähe des Endes der Aufzeichnung des Programms, die als Te dargestellt wird;

   Mittel (40) zum Berechnen einer mittleren Zeitdifferenz zwischen einer Drehperiode der Spule (30, 32) und der nächsten Drehperiode der Spule (30, 32), während das Band um die Spule (30, 32) herumgewickelt oder von dieser abgewickelt wird, die als dT dargestellt wird, durch Verwenden von Ts, N und Te; und

   die Mittel (40) zum Ableiten einer zeitlichen Adresse aus Ts, dT und To die durch Tsa dargestellte Startadresse als die Zeit zwischen dem Anfang des Bands auf der Spule (30, 32) und dem Start der Aufzeichnung des entlang dem Aufzeichungsband aufgezeichneten Programms ableiten, wobei der Wert Tsa durch die folgende Gleichung bestimmt wird:

   $$Tsa = (Ts^2 - To^2)/(2 * dT).$$

3. Vorrichtung nach Anspruch 2, weiterhin mit Mitteln (40) zum Ableiten der Endadresse des Programms, die durch Tea dargestellt wird, aus Te, dT und To als die Zeit zwischen dem Anfang des Bands auf der Spule (30, 32) und dem Ende der Aufzeichnung des entlang dem Aufzeichungsband aufgezeichneten Programms.

4. Vorrichtung nach Anspruch 3, weiterhin mit Mitteln (40) zum Subtrahieren von Tsa von Tea, um die Länge des Programms zu bestimmen.

5. Vorrichtung nach Anspruch 2, bei der die Mittel zum Messen einer Einzeldrehperiode der Spule in der Nähe eines Starts der Aufzeichnung des Programms, die als Ts dargestellt wird, folgendes umfassen:

   Mittel (20, 48, 52) zum Erzeugen von Impulsen, während sich die Spule dreht;

   ein an die Mittel (20, 48, 52) zum Erzeugen von Impulsen angekoppeltes Drehperiodenzählermittel (44) zum Messen der Zeitdauer für eine Umdrehung der Spule; und

   einen an den Drehperiodenzähler (44) angekoppelten Zeitgeber.

6. Vorrichtung nach Anspruch 5, bei der das Mittel zum Zählen der Anzahl von Umdrehungen der Spule zwischen dem Start und einem Ende der Aufzeichnung, wobei die Anzahl von Umdrehungen als N dargestellt wird, ein an die Mittel (20, 48, 52) zum Erzeugen von Impulsen angekoppeltes Umdrehungszählermittel (46) zum Zählen der Umdrehungen der Spule umfaßt.

7. Vorrichtung nach Anspruch 2, bei der die Mittel zum Messen einer Einzeldrehperiode der Spule in der Nähe eines Starts der Aufzeichnung des Programms, die als Ts dargestellt wird, folgendes umfassen:

   mehrere reflektierende Linien (50, 54) auf der Spule (30, 32);

   optische Detektormittel (48, 52) zum Erkennen des Vorbeilaufens der reflektierenden Linien (50, 54), während sich die Spule (30, 32) dreht;

   ein an die optischen Detektormittel (48, 52) angekoppeltes Drehperiodenzählermittel (44) zum Messen einer Zeitdauer für eine Umdrehung der Spule (30, 32); und

   einen an den Drehperiodenzähler (44) angekoppelten Zeitgeber.

8. Vorrichtung nach Anspruch 2, bei der die Mittel zum Berechnen einer mittleren Zeitdifferenz zwischen einer Drehperiode der Spule und der nächsten Drehperiode der Spule, während das Band um die Spule (30, 32) herumgewickelt oder von dieser abgewickelt wird, die als dT dargestellt wird, durch Verwenden von Ts, N und Te, Prozessormittel (40) zum Bestimmen eines Werts dT umfassen, der folgendem entspricht:

$$dT = (Te - Ts)/N.$$

9. Vorrichtung nach Anspruch 2, bei der die Mittel zum Ableiten der durch Tsa dargestellten Startadresse aus Ts, dT und To als die Zeit zwischen dem Anfang des Bands auf der Spule und dem Start der Aufzeichnung des entlang dem Aufzeichungsband aufgezeichneten Programms Prozessormittel (40) zum Bestimmen eines Werts Tsa umfassen, der folgendem entspricht:

$$Tsa = (Ts^2 - To^2)/(2 * dT).$$

10. Vorrichtung nach Anspruch 3, bei der die Mittel zum Ableiten der Endadresse des Programms, die durch Tea dargestellt wird, aus Te, dT und To als die Zeit zwischen dem Anfang des Bands auf der Spule und dem Ende der Aufzeichnung des entlang dem Aufzeichungsband aufgezeichneten Programms zusätzlich Prozessormittel (40) zum Bestimmen eines Werts Tea umfassen, der folgendem entspricht:

$$Tea = (Te^2 - To^2)/(2 * dT).$$

**11.** Vorrichtung nach Anspruch 1 oder 2, bei der das Band um eine Zuführungsspule (30) und eine Abnahmespule (32) in einer Kassette herumgewickelt wird.

**12.** Verfahren zur Bestimmung der zeitlichen Gesamtlänge eines Aufzeichungsbands, das mit konstanter Bandgeschwindigkeit läuft und zwischen einer Zuführungsspule (30) mit einer Nabe (36) und einer Abnahmespule (32) mit einer Nabe (38) gewickelt wird, mit den folgenden Schritten:

Aufwickeln (156) der gesamten Länge des Bands entweder auf die Zuführungsspule (30) oder auf die Abnahmespule (32) ;

Messen (157) einer als Tp dargestellten Einzeldrehperiode der Spule (30, 32), auf die das Band aufgewickelt wird;

Speichern (154) einer Einzeldrehperiode der Spule (30, 32), wenn sich der Radius des Bands auf der Spule ungefähr an einem Minimum befindet, die als To dargestellt wird;

Ableiten einer mittleren Zeitdifferenz zwischen einer Drehperiode der Zuführungs- oder Abnahmespule (30, 32) und der nächsten Drehperiode der Zuführungs- oder Abnahmespule (30, 32), während das Band um die Zuführungs- oder Abnahmespule herumgewickelt wird, die als dT dargestellt wird; und

Ableiten (159) der gesamten zeitlichen Länge vom Anfang des Bands zu dem Ende des Bands aus Tp, To und dT, die als Tl dargestellt wird, wobei der Wert Tl durch die folgende Gleichung bestimmt wird:

$$Tl = (Tp^2 - To^2)/(2 * dT).$$

### Revendications

**1.** Appareil pour déterminer l'adresse temporelle d'un emplacement actuel le long d'une bande d'enregistrement défilant à une vitesse de bande constante par rapport au début de la bande sur une bobine (30, 32) comprenant :

un moyen (44) pour mesurer une période de rotation unique de la bobine (30, 32) près d'un premier emplacement le long de la bande, ladite période étant représentée par Tp ; **caractérisé par**
un moyen (40) pour stocker une période de rotation unique de la bobine (30, 32) lorsque le rayon de la bande sur la bobine (30, 32) est approximativement à un minimum, cette période étant représentée par To ;
un moyen (40) pour dériver une différence de temps moyenne entre une période de rotation de la bobine (30, 32) et la période de rotation suivante de la bobine (30, 32) quand la bobine est enroulée autour ou déroulée de la bobine (30, 32), et étant représentée par dT ;
et
un moyen (40) pour dériver à partir de Tp, To et dT, une adresse temporelle à partir du début de la bande jusqu'au premier emplacement sur la bande, représentée par Tc, la valeur Tc étant obtenue par l'équation

$$Tc = (Tp^2 - To^2)/(2 * dT).$$

**2.** Appareil selon la revendication 1 dans lequel le premier emplacement est une adresse de début pour un programme enregistré sur une bande d'enregistrement enroulée autour d'un moyeu (36, 38) d'une bobine (30, 32) quand le programme est enregistré, et dans lequel :

le moyen (44) pour mesurer une période de rotation unique de la bobine (30, 32) mesure une période de rotation unique près du début de l'enregistrement du programme et représentée par Ts ;
le moyen (40) pour dériver une différence de temps moyenne comprend :

un moyen (46) pour compter le nombre de révolutions de la bobine (30, 32) entre le début et la fin de l'enregistrement, le nombre de révolutions étant représenté par N ;
un moyen (44) pour mesurer une période de rotation unique de la bobine (30, 32) près de la fin de l'enregistrement du programme et représentée par Te ;

un moyen (40) pour calculer une différence de temps moyenne entre une période de rotation de la bobine (30, 32) et la période de rotation suivante de la bobine (30, 32) quand la bande d'enregistrement est enroulée autour ou déroulée de la bobine (30, 32) et représentée par dT en utilisant Ts, N et Te ; et

le moyen (40) pour dériver une adresse temporelle dérive de Ts, dT et To l'adresse de début représentée par Tsa comme le temps entre le début de la bande sur la bobine (30, 32) et le début de l'enregistrement du programme enregistré le long de la bande d'enregistrement, la valeur Tsa étant obtenue par l'équation

$$Tsa = (Ts^2 - To^2)/(2 * dT).$$

3. Appareil selon la revendication 2, comprenant de plus un moyen (40) pour dériver à partir de Te, dT et To, l'adresse de fin du programme et représentée par Tea comme le temps entre le début de la bande sur la bobine (30, 32) et la fin de l'enregistrement du programme enregistré le long de la bande d'enregistrement.

4. Appareil selon la revendication 3, comprenant de plus un moyen (40) pour soustraire Tsa de Tea pour déterminer la longueur du programme.

5. Appareil selon la revendication 2, dans lequel le moyen pour mesurer une période de rotation unique de la bobine près du début de l'enregistrement du programme et représentée par Ts comprend :

un moyen (20, 48, 52) pour générer des impulsions quand la bobine tourne ;
un moyen de compteur de période de rotation (44) couplé au moyen (20, 48, 52) pour générer des impulsions pour mesurer le temps pour une rotation de la bobine ; et
une horloge (42) couplée au compteur de période de rotation (44).

6. Appareil selon la revendication 5 dans lequel le moyen pour compter le nombre de révolutions de la bobine entre le début et une fin de l'enregistrement, le nombre de révolutions étant représenté par N, comprend un moyen de compteur de révolutions (46) couplé au moyen (20, 48, 52) pour générer des impulsions pour compter les révolutions de la bobine.

7. Appareil selon la revendication 2, dans lequel le moyen pour mesurer une période de rotation unique de la bobine près d'un début de l'enregistrement du programme, et représentée par Ts, comprend :

une pluralité de lignes réfléchissantes (50, 54) sur la bobine (30, 32);
un moyen de détecteur optique (48, 52) pour détecter le passage des lignes réfléchissantes (50, 54) quand la bobine (30, 32) tourne ;
un moyen de compteur de période de rotation (44) couplé au moyen de détecteur optique (48, 52) pour mesurer un temps pour une rotation de la bobine (30, 32) ; et
une horloge (42) couplée au compteur de période de rotation (44).

8. Appareil selon la revendication 2, dans lequel le moyen pour calculer une différence de temps moyenne entre une période de rotation de la bobine et la période de rotation suivante de la bobine quand la bande d'enregistrement est enroulée autour ou déroulée de la bobine, et représentée par dT, en utilisant Ts, N et Te comprend un moyen de processeur (40) pour obtenir une valeur dT correspondant à :

$$dT = (Te - Ts)/N.$$

9. Appareil selon la revendication 2, dans lequel le moyen pour dériver à partir de Ts, dT ou To, l'adresse de début, et représentée par Tsa, comme le temps entre le début de la bande sur la bobine et le début de l'enregistrement du programme enregistré le long de la bande d'enregistrement comprend un moyen de processeur (40) pour obtenir une valeur Tsa correspondant à :

$$Tsa = (Ts^2 - To^2)/(2 * dT).$$

10. Appareil selon la revendication 3, dans lequel le moyen pour dériver à partir de Te, dT ou to, l'adresse de fin du programme, et représentée par Tea, comme le temps entre le début de la bande sur la bobine et la fin de l'enregistrement du programme enregistré le long de la bande d'enregistrement comprend de plus un moyen de processeur (40) pour obtenir une valeur Tea correspondant à :

$$Tea = (Te^2 - To^2)/(2 * dT).$$

11. Appareil selon la revendication 1 ou 2, dans lequel la bande est enroulée autour d'une bobine débitrice (30) et d'une bobine réceptrice (32) dans une cassette (12).

12. Procédé pour déterminer la longueur totale en temps d'une bande d'enregistrement se déplaçant à une vitesse de bande constante et enroulée entre une bobine débitrice (30) ayant un moyeu (36) et une bobine réceptrice (32) ayant un moyeu (38), comprenant les étapes de :

enroulement (156) de la longueur entière de la bande soit sur la bobine débitrice (30) soit sur la bobine réceptrice (32) ;

mesure (157) d'une période de rotation unique, représentée par Tp, de la bobine (30, 32) sur laquelle la bande est enroulée ;

stockage (154) d'une période de rotation unique de la bobine (30, 32) lorsque le rayon de la bande sur la bobine est approximativement à un minimum, et représentée par To ;

dérivation d'une différence de temps moyenne entre une période de rotation de la bobine débitrice ou réceptrice (30, 32) et la période de rotation suivante de la bobine débitrice ou réceptrice (30, 32) quand la bande est enroulée autour de la bobine débitrice ou réceptrice, et représentée par dT ; et

dérivation (159) à partir de Tp, To et dT de la longueur totale temporelle à partir du début de la bande jusqu'à la fin de la bande représentée par T1, la valeur T1 étant obtenue par l'équation

$$T1 = (Tp^2 - To^2)/(2 * dT).$$

*Fig. 1a*

Fig.16

48

CLOCK  42

CLOCK COUNTER R  44  45

PULSE  49

REVOLUTION COUNTER R  46  49

MICROPROCESSOR  40

47

EP 0 741 901 B1

## Fig. 1c

INDEX                    TAPE NO. 8

| TITLE | MIN |
|---|---|
| 1. WHEEL OF FORTUNE | 30 |
| 2. ENTERTAINMENT TONITE | 30 |
| 3. MURPHY BROWN | 30 |
| 4. TERMINATOR | 90 |
| 5. END | 60 |

EP 0 741 901 B1

*Fig. 2a*

*Fig. 2b*

*Fig. 2c*

Fig.2d

*Fig.3*

```
┌─────────────────────┐
│   INSERT TAPE       │──110
│   INTO VCR          │
└─────────────────────┘
           │
           ▼
┌─────────────────────┐
│  START RECORDING    │──112
│     SESSION         │
└─────────────────────┘
           │
           ▼
┌─────────────────────┐
│ MEASURE ROTATIONAL  │──114
│ PERIOD OF TAKE-UP   │
│ REEL NEAR START     │
│ OF RECORDING = Ts   │
└─────────────────────┘
           │
           ▼
┌─────────────────────┐           ┌──────────────────────┐
│ COUNT NUMBER OF     │──116      │ RETRIEVE T0          │──122
│ REVOLUTIONS OF      │           │ FROM D(0)            │
│ TAKE-UP REEL        │           │ T0 = 2πV0/V          │
│ BETWEEN START       │           │ WHERE:               │
│ AND END OF          │           │   V0 = RADIUS OF     │
│ RECORDING = Nse     │           │      TAKE-UP         │
└─────────────────────┘           │      REEL HUB        │
           │                      │ V = LINEAR           │
           ▼                      │    VELOCITY OF       │
┌─────────────────────┐           │    TAPE TRAVEL       │
│ MEASURE ROTATIONAL  │──118      └──────────────────────┘
│ PERIOD OF TAKE-UP   │
│ REEL NEAR END       │
│ OF RECORDING = Te   │
└─────────────────────┘
           │
           ▼
┌─────────────────────┐
│  CALCULATE          │──120
│ DIFFERENTIAL PERIOD │
│ dT = (Te - Ts)/Nse  │
└─────────────────────┘
           │
           ▼
┌──────────────────────────┐
│ CALCULATE TIME FROM      │──124
│ BEGINNING OF TAPE TO START│
│ OF RECORDING (START       │
│ ADDRESS)                  │
│ Tsa = (Ts² - T0²)/2dT     │
└──────────────────────────┘
           │
           ▼
┌──────────────────────────┐
│ CALCULATE TIME FROM      │──126
│ BEGINNING OF TAPE TO END │
│ OF RECORDING (END ADDRESS)│
│ Tea = (Te² - T0²)/2dT     │
└──────────────────────────┘
```

Box 114: MEASURE ROTATIONAL PERIOD OF TAKE-UP REEL NEAR START OF RECORDING $= T_S$

Box 116: COUNT NUMBER OF REVOLUTIONS OF TAKE-UP REEL BETWEEN START AND END OF RECORDING $= N_{SE}$

Box 122: RETRIEVE $T_0$ FROM $D(0)$ $T_0 = 2\pi V_0 / V$ WHERE: $V_0 =$ RADIUS OF TAKE-UP REEL HUB $V =$ LINEAR VELOCITY OF TAPE TRAVEL

Box 118: MEASURE ROTATIONAL PERIOD OF TAKE-UP REEL NEAR END OF RECORDING $= T_E$

Box 120: CALCULATE DIFFERENTIAL PERIOD $dT = \dfrac{T_E - T_S}{N_{SE}}$

Box 124: CALCULATE TIME FROM BEGINNING OF TAPE TO START OF RECORDING (START ADDRESS) $T_{SA} = \dfrac{(T_S^2 - T_0^2)}{2dT}$

Box 126: CALCULATE TIME FROM BEGINNING OF TAPE TO END OF RECORDING (END ADDRESS) $T_{EA} = \dfrac{T_E^2 - T_0^2}{2dT}$

Fig.4

INSERT TAPE INTO VCR — 130

START RECORDING SESSION — 132

MEASURE ROTATIONAL PERIOD OF SUPPLY REEL NEAR START OF RECORDING = $T_S$ — 134

136 — COUNT NUMBER OF REVOLUTIONS OF SUPPLY REEL BETWEEN START AND END OF RECORDING = $N_{SE}$

142 — RETRIEVE $T_0$ FROM $D(0)$
$$T_0 = 2\pi V_0 / V$$
WHERE:
$V_0$ = RADIUS OF SUPPLY REEL HUB
$V$ = LINEAR VELOCITY OF TAPE TRAVEL

138 — MEASURE ROTATIONAL PERIOD OF SUPPLY REEL NEAR END OF RECORDING = $T_E$

140 — CALCULATE DIFFERENTIAL PERIOD
$$dT = \frac{T_S - T_E}{N_{SE}}$$

144 — CALCULATE TIME TO END OF TAPE FROM START OF RECORDING (START ADDRESS)
$$T_{SAI} = \frac{(T_S^2 - T_0^2)}{2dT}$$

145 — TIME FROM BEGINNING OF TAPE TO START OF RECORDING
$$T_{SA} = (\text{TOTAL TAPE LENGTH IN TIME}(L)) - T_{SAI}$$

146 — CALCULATE TIME TO END OF TAPE FROM END OF RECORDING (END ADDRESS)
$$T_{EAI} = \frac{T_E^2 - T_0^2}{2dT}$$

147 — TIME FROM BEGINNING OF TAPE TO START OF RECORDING
$$T_{EA} = (\text{TOTAL TAPE LENGTH IN TIME}(L)) - T_{EAI}$$

28

## Fig. 5a

150 — MEASURE ROTATIONAL PERIOD OF TAKE-UP OR SUPPLY REEL = Tp BY AVERAGING SEVERAL REVOLUTION PERIODS

148 — STORE T0 AND dT

151 — RETRIEVE STORED T0 AND STORED AVERAGE VALUE OF dT

152 — IF TAKE-UP REEL CALCULATE TIME FROM BEGINNING OF TAPE TO CURRENT POSITION

$$T_{CA} = \frac{(Tp^2 - T_0^2)}{2dT}$$

153 — IF SUPPLY REEL CALCULATE TIME FROM BEGINNING OF TAPE TO CURRENT POSITION $T_{CA}$ = TOTAL TAPE LENGTH IN TIME(L) − $\frac{(Tp^2 - T_0^2)}{2dT}$

## Fig. 5b

156 — WIND TAPE ONTO SUPPLY OR TAKE-UP REEL

154 — STORE T0 AND dT

157 — MEASURE ROTATIONAL PERIOD OF SUPPLY REEL OR TAPE-UP REEL, RESPECTIVELY = Tp BY AVERAGING SEVERAL REVOLUTION PERIODS

158 — RETRIEVE STORED T0 AND STORED AVERAGE VALUE OF dT

159 — CALCULATE LENGTH OF TAPE IN TIME

$$T_L = \frac{Tp^2 - T_0^2}{2dT}$$

154 — CALCULATE LENGTH OF TAPE IN UNITS OF LENGTH $L = V * T_L$ WHERE V = LINEAR VELOCITY OF TAPE TRAVEL

**Fig. 6a**

| HR TAPES | START OF PROGRAM 1 | START OF PROGRAM 2 | START OF PROGRAM 3 | END |
|---|---|---|---|---|
| CONTROL TRACK 166 180 | VLSS | VLSS 182 | VLSS 184 | |
| 167 VBI LINE 19 | TP₁A TP₁A TP₁A TP₁A TP₁A TP₁A | TP₂A TP₂A TP₂A TP₂A TP₂A | TP₃A TP₃A TP₃A TP₃A | |

DIRECTORY MEMORY DIRECTORY 160 170 172 174
66

**Fig. 6b**

| PR TAPES | START OF PROGRAM 1 | START OF PROGRAM 2 | START OF PROGRAM 3 | END |
|---|---|---|---|---|
| CONTROL TRACK 166 167 | VLSS 186 176 | VLSS 188 | VLSS 190 | |
| VBI LINE 19 168 | TP₁A TP₁A TP₁A TP₁A TP₁A TP₁A | TP₂A TP₂A TP₂A TP₂A TP₂A | TP₃A TP₃A TP₃A TP₃A | |
| VBI LINE 20 | D D D D D D D D | D D D D D D D | D D D D D | |

178

**Fig. 6c**

| R1 TAPES 166 | START OF PROGRAM 1 | START OF PROGRAM 2 | START OF PROGRAM 3 | END |
|---|---|---|---|---|
| CONTROL TRACK | VLSS 192 | VLSS 194 | VLSS 196 | |

34

66

DIRECTORY MEMORY DIRECTORY 160

Fig.7

160

DIRECTORY

| | |
|---|---|
| D(0) | 161 |
| D(1) | 162 |
| D(2) | 163 |
| ⋮ | |
| D(N) | 164 |
| | |

## Fig. 8a

D(0) INFORMATION ON VBI LINE OR IN SRAM

↙ 161

| INITIAL ROTATIONAL PERIOD (T₀) | AVERAGE SINGLE REEL DIFFERENTIAL PERIOD (dT) | ←——————— ADDITIONAL FIELDS ———————→ |
|---|---|---|
| 200 | 202 | |

## Fig. 8b

D(N) INFORMATION ON VBI LINE OR IN SRAM (FOR N ≥ 1)

↙ 204

| PROGRAM TITLE | PROGRAM NUMBER (N) | START ADDRESS (TDS) | END ADDRESS | RECORD SPEED | ←——————— ADDITIONAL FIELDS ———————→ |
|---|---|---|---|---|---|
| | 206 | 208 | 210 | 212 | |

## Fig. 9

TPA PACKET INFORMATION ON VBI LINE

| TAPE IDENTIFICATION (TID) | PROGRAM NUMBER (N) | ABSOLUTE ADDRESS (AA) |
|---|---|---|
| 214 | 216 | 218 |

EP 0 741 901 B1

*Fig.10*

AT START OF PROGRAM RECORDING VCR WRITES VISS MARK ON CONTROL TRACK — 220

DURING PROGRAM RECORDING DERIVE $T_{SA}$ AND $T_{EA}$ (SEE FIG.5a) — 222

DURING RECORD CONTINUOUSLY DERIVE $T_{CA}$ (SEE FIG.5a) AND STORE INTO VBI ON TAPE — 224

AT END OF RECORDING STORE $T_{SA}$ AND $T_{EA}$ IN DIRECTORY FOR PROGRAM — 228

## Fig.11

POSITIONING TAPE AT BEGINNING OF FIRST PROGRAM — 240

INSERT VISS MARK ON CONTROL TRACK — 242

DERIVE PROGRAM START TIME $T_{SA}$ (SEE FIGS. 5a) — 244

USER PROMPTED TO ENTER PROGRAM TITLE — 245

STORE $T_{SA}$ AND TITLE FOR PROGRAM IN DIRECTORY MEMORY — 246

FAST FORWARD TO END OF PROGRAM — 248

DERIVE PROGRAM END TIME $T_{EA}$ (SEE FIG. 5a) — 250

STORE $T_{EA}$ FOR PROGRAM IN DIRECTORY MEMORY — 252

ADVANCE TAPE TO START OF NEXT PROGRAM ON TAPE — 254

*Fig. 12a*

INSERT TAPE
INTO VCR `260`

ACCESS VBI LINE 19
FROM TAPE AND
READ TAPE ID `262`

TID
PRESENT
? `264`

YES

NO

DETERMINE WHETHER
HR OR PR TAPE FROM TID `266`

OR

RETROACTIVELY
INDEXED
TAPE
? `267`

NO

YES

THIS IS A
NONINDEXED
TAPE

TO FIG. 12b      TO FIG. 12c      TO FIG. 12a

35

*Fig. 12b*

FROM FIG. 12a

280 — USE TID TO ACCESS DIRECTORY FOR TAPE FROM DIRECTORY MEMORY

282 — DISPLAY DIRECTORY AND PROMPT USER TO SELECT A PROGRAM TO ACCESS VIA REMOTE / MANUAL CONTROLS

284 — READ START ADDRESS = $T_{DS}$ OF PROGRAM FROM DIRECTORY

286 — DERIVE TCA (SEE FIG. 5a)

290 — CALCULATE $T_{CA} - T_{DS} = T_1$

292 — IF $T_1 > 0$, THEN REWIND FOR $T_1$ ADJUSTED FOR REWIND SPEED; IF $T_1 < 0$, THEN FAST FORWARD $T_1$ ADJUSTED FOR FAST FORWARD SPEED

294 — IS AA PART OF TPA ?
NO

296 — YES — READ TPA FROM TAPE VBI LINE 19 AND CALCULATE AA $- T_{DS} = T_2$

298 — IF $T_2 > 0$, THEN REWIND FOR $T_2$ ADJUSTED FOR REWIND SPEED TO START OF PROGRAM; IF $T_2 < 0$, THEN FAST FORWARD FOR $T_2$ ADJUSTED FOR FAST FORWARD SPEED

300 — ARE VLSS MARKS USED ?
NO
YES

302 — SLOW DOWN TO SEARCH SPEED AND SEARCH FOR VLSS MARK

304 — VLSS MARK FOUND ?
YES
NO

305 — CHECK PROPER PROGRAM NUMBER

307 — PROPER PROGRAM NUMBER ?
NO
YES

306 — SEARCH FOR VLSS MARK

308 — PROGRAM START

36

EP 0 741 901 B1

*Fig. 12C*

320 — USE TID TO ACCESS DIRECTORY FOR TAPE FROM VBI LINE 20

322 — DISPLAY DIRECTORY TO USER AND PROMPT USER TO SELECT A PROGRAM TO ACCESS VIA REMOTE / MANUAL CONTROLS

336 — READ TPA FROM TAPE VBI LINE 19 AND CALCULATE $AA - T_{DS} = T_2$

338 — IF $T_2 > 0$, THEN REWIND FOR $T_2$ ADJUSTED FOR REWIND SPEED TO START OF PROGRAM, IF $T_2 < 0$, THEN FAST FORWARD FOR $T_2$ ADJUSTED FOR FAST FORWARD SPEED

339 — SLOW DOWN TO SEARCH SPEED AND SEARCH FOR VISS MARK

344 — VISS MARK FOUND ?

345 — CHECK FOR PROGRAM PROGRAM NUMBER

347 — PROPER PROGRAM NUMBER ?

NO

346 — SEARCH FOR VISS MARK

348 — PROGRAM START

37

EP 0 741 901 B1

FROM FIG. 12a

*Fig. 12d*

PROMPT USER VIA DISPLAY TO INPUT TAPE IDENTIFICATION — 356

USE TID TO ASSESS DIRECTORY FOR TAPE FROM DIRECTORY MEMORY — 360

DISPLAY DIRECTORY TO USER AND PROMPT USER TO SELECT A PROGRAM TO ACCESS VIA REMOTE / MANUAL CONTROLS — 362

READ START ADDRESS = $T_{DS}$ OF PROGRAM FROM DIRECTORY — 364

DERIVE TCA (SEE FIG. 5a) — 366

CALCULATE $TCA - T_{DS} = T_1$ — 370

IF $T_1 > 0$, THEN REWIND FOR $T_1$ ADJUSTED FOR REWIND SPEED; IF $T_1 < 0$, THEN FAST FORWARD FOR $T_1$ ADJUSTED FOR FAST FORWARD SPEED — 372

SLOW DOWN TO SEARCH SPEED AND SEARCH FOR VLSS MARK — 382

VLSS MARK FOUND? — 384 — NO

YES

PROGRAM START — 388

38

## Fig. 13a

```
        ┌─────────────────────┐
        │   INSERT  TAPE      │──260
        │    INTO VCR         │
        └─────────────────────┘
                  │
                  ▼
        ┌─────────────────────┐
        │  ACCESS VBI LINE 19 │──262
        │  FROM TAPE AND      │
        │  READ TAPE  ID      │
        └─────────────────────┘
                  │
                  ▼
                 ╱╲
     YES       ╱ TID ╲ ──264    NO
      ◄───────╱PRESENT ╲────────┐
             ╲    ?    ╱        │
              ╲      ╱          │
               ╲  ╱            │
                ╲╱             │
      │                        ▼
      │                      ╱╲
      ▼             266    ╱RETRO-╲        NO
 ┌──────────────────┐    ╱ACTIVELY╲──────────┐
 │ DETERMINE WHETHER│   ╲ INDEXED ╱          │
 │ HR OR PR TAPE    │    ╲ TAPE  ╱           ▼
 │ FROM TID         │     ╲    ╱ 267   ┌──────────┐
 └──────────────────┘      ╲ ╱  YES    │THIS IS A │
      │      OR             │           │NONINDEXED│
      │                     │           │  TAPE    │
      ▼         ▼           ▼           └──────────┘
 TO FIG. 13b  TO FIG.13C  TO FIG. 13d
 (HR TAPE)    (PR TAPE)   (RI TAPE)
```

39

FROM FIG.13a

*Fig.13b*

280 — USE TID TO ACCESS DIRECTORY FOR TAPE FROM DIRECTOR MEMORY

282 — DISPLAY DIRECTORY AND PROMPT USER TO SELECT A PROGRAM TO ACCESS VIA REMOTE/MANUAL CONTROLS

284 — READ START ADDRESS = TDS OF PROGRAM FROM DIRECTORY

486 — IS AA PART OF TPA? — NO

488 — READ TPA FROM TAPE VBI LINE TO OBTAIN ABSOLUTE ADDRESS (TAA) CALCULATE ROTATIONAL PERIOD OF CURRENT ADDRESS
$$Tc = ((2dT \ast TAA) + T_0^2)^{1/2}$$

YES

490 — MEASURE ROTATIONAL PERIOD (Tc) OF CURRENT ADDRESS BY AVERAGING SEVERAL TURNS

CALCULATE ROTATIONAL PERIOD OF START ADDRESS
$$Ts = ((2dT \ast T_{DS}) + T_0^2)^{1/2}$$
494

496 — CALCULATE
$$N = \frac{Ts - Tc}{dT} = \# \text{ OF TURNS OF REEL}$$

498 — IF N>0 THEN FAST FORWARD BY SLIGHTLY LESS THAN N TURNS, ELSE IF N ≤ 0 THEN REWIND BY SLIGHTLY MORE THAN |N| TURNS

500 — SLOW DOWN TO SEARCH SPEED AND SEARCH FOR VLSS MARK IN CONTROL TRACK

502 — VLSS MARK FOUND? — YES / NO

504 — SLOW TO PLAY SPEED AND CHECK FOR PROPER PROGRAM NO. FROM TPA IN VBI

510 — IF PROGRAM NO. > DESIRED PROGRAM NO. THEN REWIND SHORT DISTANCE ELSE FAST FORWARD SHORT DISTANCE

506 — PROPER PROGRAM NO.? — NO

YES

508 — PROGRAM START

FROM FIG. 13a

*Fig 13c*

280 — USE TID TO ACCESS DIRECTORY FOR TAPE FROM DIRECTOR MEMORY

282 — DISPLAY DIRECTORY AND PROMPT USER TO SELECT A PROGRAM TO ACCESS VIA REMOTE/MANUAL CONTROLS

284 — READ START ADDRESS = TDS OF PROGRAM FROM DIRECTORY

488 — READ TPA FROM TAPE VBI LINE TO OBTAIN ABSOLUTE ADDRESS (TAA) CALCULATE ROTATIONAL PERIOD OF CURRENT ADDRESS
$$T_C = ((2dT * TAA) + T\sigma^2)^{1/2}$$

CALCULATE ROTATIONAL PERIOD OF START ADDRESS
$$T_S = ((2dT * TDS) + T\sigma^2)^{1/2}$$
— 494

496 — CALCULATE $N =$
$$\frac{T_S - T_C}{dT} = \# \text{ OF TURNS OF REEL}$$

498 — IF N>0 THEN FAST FORWARD BY SLIGHTLY LESS THAN N TURNS, ELSE IF N ≤ 0 THEN REWIND BY SLIGHTLY MORE THAN |N| TURNS

500 — SLOW DOWN TO SEARCH SPEED AND SEARCH FOR VISS MARK IN CONTROL TRACK

504 — SLOW TO PLAY SPEED AND CHECK FOR PROPER PROGRAM NO. FROM TPA IN VBI

502 — VISS MARK FOUND ?   YES   NO

506 — PROPER PROGRAM NO.?   NO

510 — IF PROGRAM NO. > DESIRED PROGRAM NO. THEN REWIND SHORT DISTANCE ELSE FAST FORWARD SHORT DISTANCE

YES

508 — PROGRAM START

**Fig.13d**

FROM FIG.13a

280 — USE TID TO ACCESS DIRECTORY FOR TAPE FROM DIRECTOR MEMORY

282 — DISPLAY DIRECTORY AND PROMPT USER TO SELECT A PROGRAM TO ACCESS VIA REMOTE/MANUAL CONTROLS

284 — READ START ADDRESS = $T_{DS}$ OF PROGRAM FROM DIRECTORY

490 — MEASURE ROTATIONAL PERIOD ($T_C$) OF CURRENT ADDRESS BY AVERAGING SEVERAL TURNS

CALCULATE ROTATIONAL PERIOD OF START ADDRESS $T_S = ((2dT * T_{DS}) + T_0^2)^{1/2}$ — 494

496 — CALCULATE $N = \dfrac{T_S - T_C}{dT}$ = # OF TURNS OF REEL

498 — IF N>0 THEN FAST FORWARD BY SLIGHTLY LESS THAN N TURNS, ELSE IF N≤0 THEN REWIND BY SLIGHTLY MORE THAN |N| TURNS

500 — SLOW DOWN TO SEARCH SPEED AND SEARCH FOR VISS MARK IN CONTROL TRACK

502 — VISS MARK FOUND ? — YES / NO

504 — SLOW TO PLAY SPEED AND CHECK FOR PROPER PROGRAM

506 — PROPER PROGRAM ? — YES / NO

REWIND OR FAST FORWARD SHORT DISTANCE

508 — PROGRAM START

# FIG.14

```
┌─────────────────────────────┐
│  USE  CAMERA  TO  RECORD  TIME │─── 600
│ DISPLAYED  ON  A  DIGITAL  CLOCK │
│         ALONG  A  TAPE          │
└─────────────────────────────┘
              │
              ▼
┌─────────────────────────────┐
│     REWIND  AND  PLAY  TAPE     │─── 602
└─────────────────────────────┘
              │
              ▼
┌─────────────────────────────┐
│   DISPLAY  RECORDED  TIME  ON   │─── 604
│        A  TELEVISION            │
└─────────────────────────────┘
              │
              ▼
┌─────────────────────────────┐
│    MEASURE  POSITION  IN  TIME  │─── 606
│        ALONG  THE  TAPE         │
└─────────────────────────────┘
              │
              ▼
┌─────────────────────────────┐
│     COMPARE  THE  MEASURED      │─── 608
│   POSITION  IN  TIME  WITH  THE  │
│   DISPLAYED  RECORDED  TIME     │
└─────────────────────────────┘
```